# EUROPEAN PATENT APPLICATION

(11) **EP 4 329 417 A1**
(43) Date of publication of application: **28.02.2024**
(21) Application number: 22791962.8
(22) Date of filing: 15.04.2022
(51) Int. Cl.: H04W 76/18, H04W 76/12, H04W 76/11, H04W 80/10, H04W 24/04

(54) **METHOD FOR MANAGING REDUNDANT PDU SESSION FOR REDUNDANT TRANSMISSION**

(30) Priority: 20.04.2021 KR 20210051255; 08.06.2021 KR 20210074390
(71) Applicant: LG Electronics Inc., Yeongdeungpo-gu Seoul 07336 (KR)
(72) Inventor: KIM, Seokjung, Seoul 06772 (KR); KIM, Laeyoung, Seoul 06772 (KR); YOUN, Myungjune, Seoul 06772 (KR); XU, Jian, Seoul 06772 (KR); BYUN, Daewook, Seoul 06772 (KR)
(74) Representative: Maikowski & Ninnemann Patentanwälte Partnerschaft mbB
(86) International application number: PCT/KR2022/005453
(87) International publication number: WO 2022/225262

(57) **Abstract**

One disclosure of the present specification provides a method for establishing communication by a session management function (SMF). The method comprises the steps of: transmitting to a base station a request message requesting resource allocation between a first protocol data unit (PDU) session and a second PDU session, wherein the first PDU session and the second PDU session are established by user equipment (UE) on the basis of the same PDU session pair ID; receiving a response message from the base station, wherein the response message comprises indication information indicating whether or not a disjoint UP path is allocated to the first PDU session and the second PDU session, respectively; and transmitting the indication information to the UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

### TECHNICAL PROBLEM

If allocation of a disjoint UP path for a redundant PDU session fails, the UE should be notified of the allocation failure.

### TECHNICAL SOLUTION

The SMF may receive a disjoint UP path allocation failure from the base station and notify the terminal.

### ADVANTAGEOUS EFFECTS

The present specification may have various effects.

For example, through the procedure disclosed in this specification, when allocation of a Disjoint UP Path fails, the terminal can release the PDU session rather than continuing to maintain it, thereby preventing unnecessary waste of resources.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 shows an example of UE to which implementations of the present disclosure is applied.
FIGS. 5 and 6 show an example of a PDU session establishment procedure to which implementations of the present disclosure is applied.
FIG. 7 shows an example of a redundant user plane path using dual connectivity.
FIG. 8 and FIG. 9 show the first embodiment of the present specification.
FIGS. 10 and 11 show a second embodiment of the present specification.
FIG. 12 shows a third embodiment of the present specification.
FIG. 13 shows the fourth embodiment of the present specification.
FIG. 14 shows the fifth embodiment of this specification.
FIG. 15 shows the sixth embodiment of the present specification.
FIG. 16 shows the seventh embodiment of this specification.
FIGS. 17 and 18 show the eighth embodiment of this specification.
FIG. 19 shows the procedure of SMF for the disclosure of this specification.
FIG. 20 shows the procedure of UE for the disclosure of this specification.
FIG. 21 illustrates a block diagram of a network node according to an embodiment of the present specification.
FIG. 22 shows a detailed deployment scenario.

### BEST MODE

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C" .

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

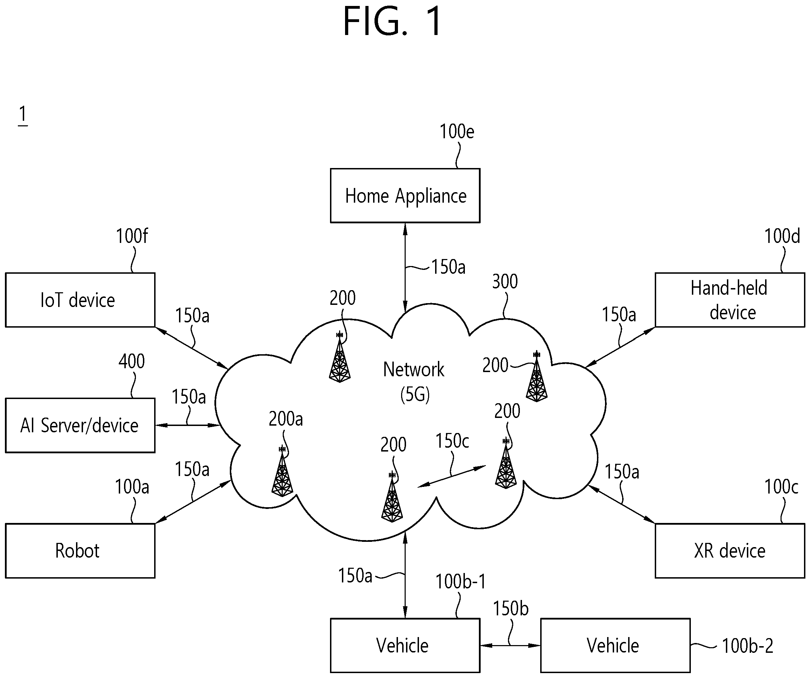

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). AUE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

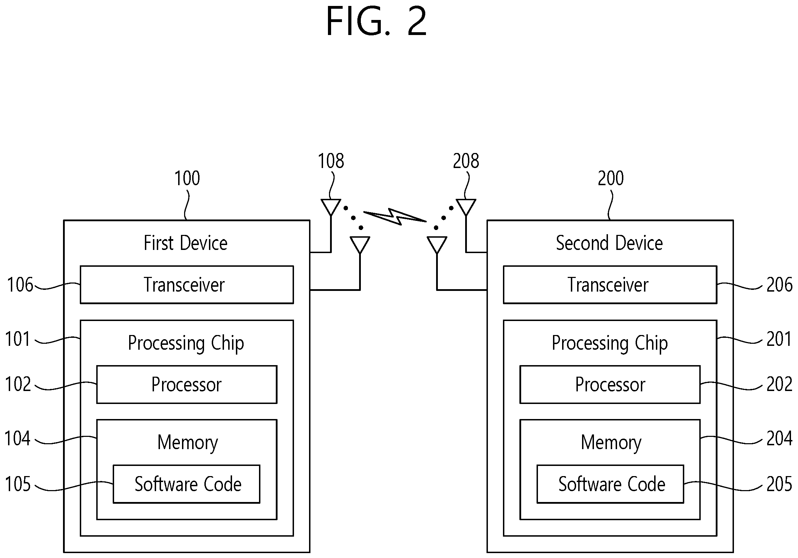

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

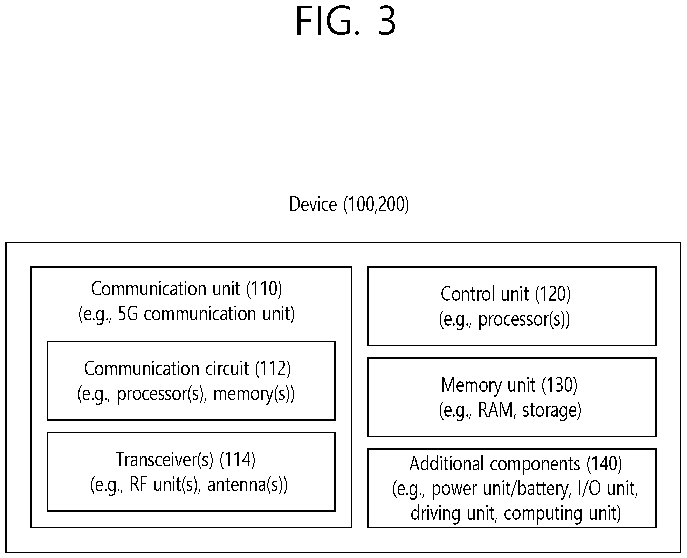

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

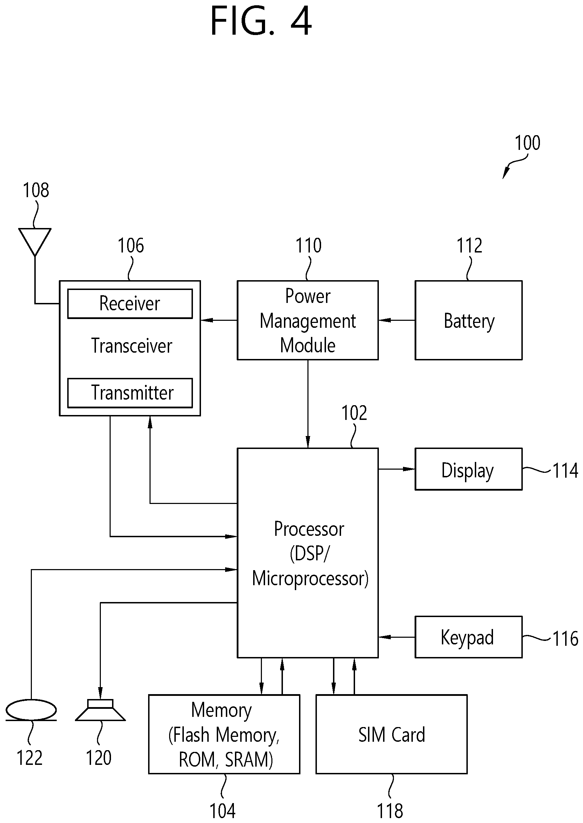

**FIG. 4** **shows an example of UE to which implementations of the present disclosure is applied.**

Referring to FIG. 4, a UE 100 may correspond to the first wireless device 100 of FIG. 2 and/or the wireless device 100 or 200 of FIG. 3.

A UE 100 includes a processor 102, a memory 104, a transceiver 106, one or more antennas 108, a power management module 110, a battery 112, a display 114, a keypad 116, a subscriber identification module (SIM) card 118, a speaker 120, and a microphone 122.

The processor 102 may be configured to implement the descriptions, functions, procedures, suggestions, methods and/or operational flowcharts disclosed in the present disclosure. The processor 102 may be configured to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of a digital signal processor (DSP), a central processing unit (CPU), a graphics processing unit (GPU), a modem (modulator and demodulator). An example of the processor 102 may be found in SNAPDRAGON^{™} series of processors made by Qualcomm^{®}, EXYNOS^{™} series of processors made by Samsung^{®}, a series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 110 manages power for the processor 102 and/or the transceiver 106. The battery 112 supplies power to the power management module 110.

The display 114 outputs results processed by the processor 102. The keypad 116 receives inputs to be used by the processor 102. The keypad 116 may be shown on the display 114.

The SIM card 118 is an integrated circuit that is intended to securely store the international mobile subscriber identity (IMSI) number and its related key, which are used to identify and authenticate subscribers on mobile telephony devices (such as mobile phones and computers). It is also possible to store contact information on many SIM cards.

The speaker 120 outputs sound-related results processed by the processor 102. The microphone 122 receives sound-related inputs to be used by the processor 102.

### <PDU session establishment>

APDU session establishment procedure is described. Section 4.3.2 of 3GPP TS 23.502 V16.3.0 (2019-12) can be referred.

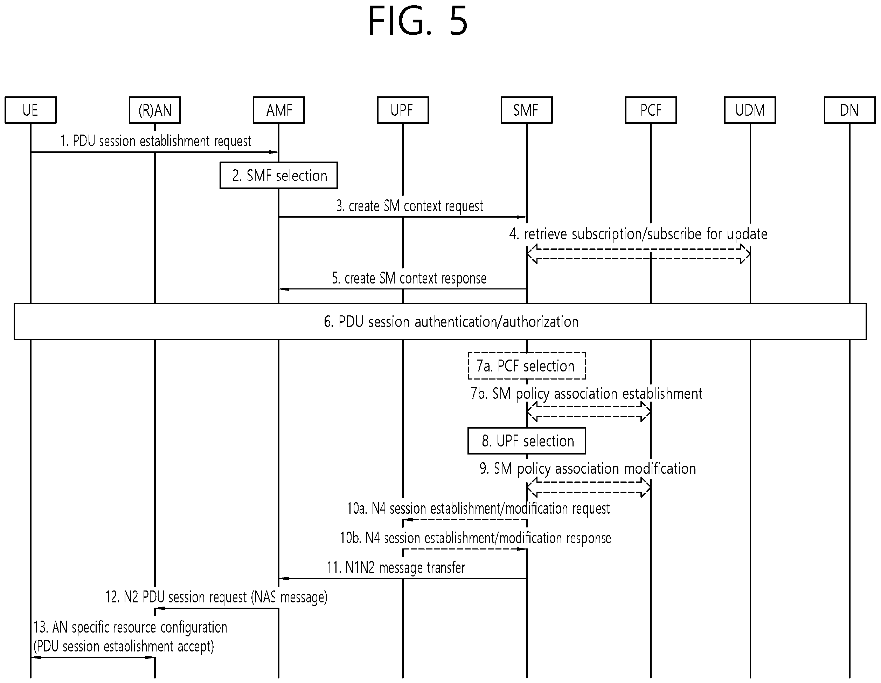

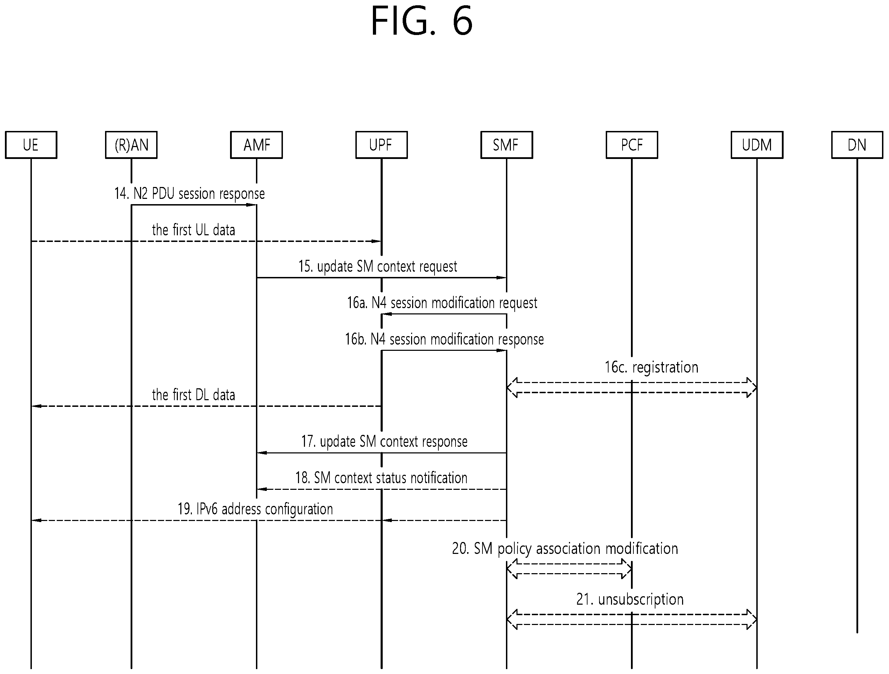

**FIGS. 5** **and** **6** **show an example of a PDU session establishment procedure to which implementations of the present disclosure is applied.**

APDU session establishment may correspond to:
- a UE initiated PDU session establishment procedure.
- a UE initiated PDU session handover between 3GPP and non-3GPP.
- a UE initiated PDU session handover from EPS to 5GS.
- a network triggered PDU session establishment procedure.

APDU session may be associated either (a) with a single access type at a given time, i.e., either 3GPP access or non-3GPP access, or (b) simultaneously with multiple access types, i.e., one 3GPP access and one non-3GPP access. APDU session associated with multiple access types is referred to as multi access PDU (MAPDU) session and it may be requested by access traffic steering, switching, splitting (ATSSS)-capable UEs.

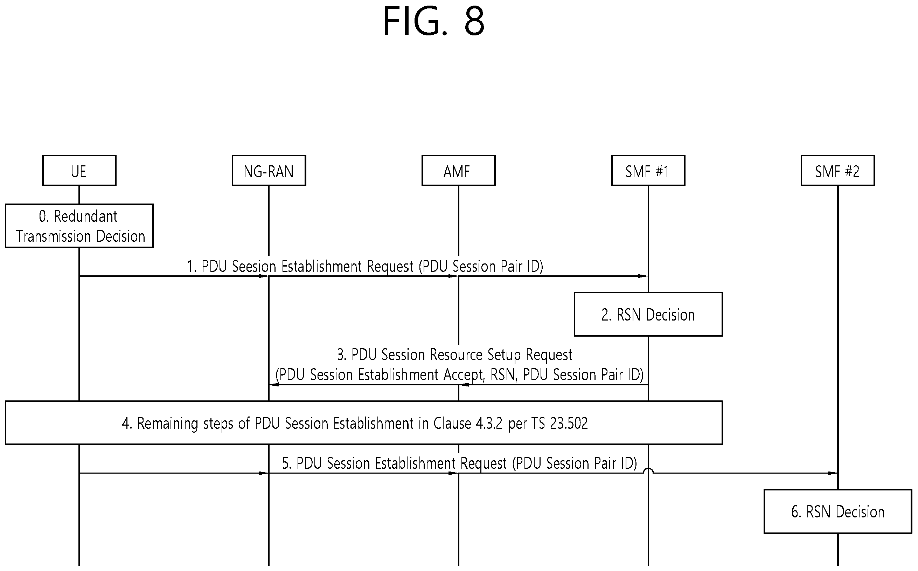

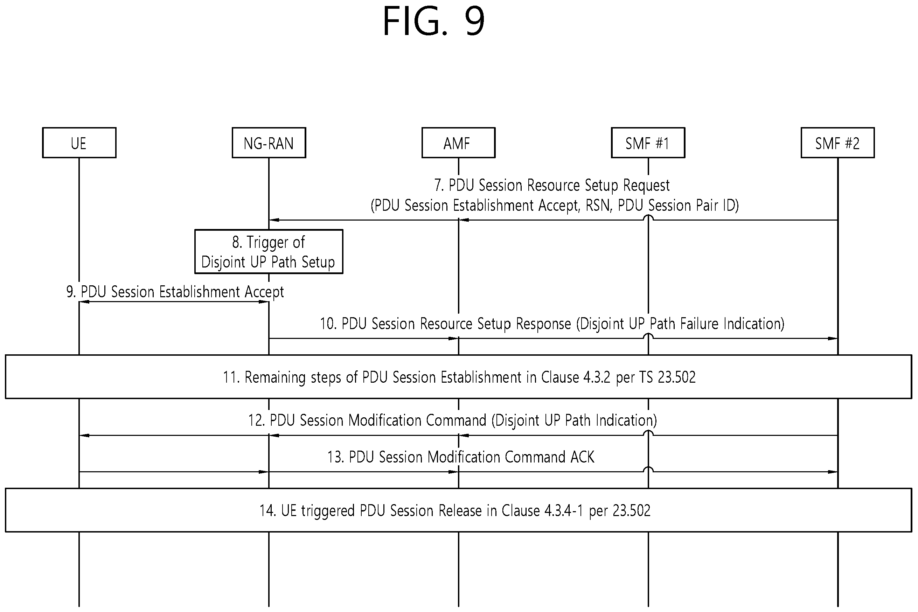

FIGS. 8 and 9 specify the procedures for establishing PDU sessions associated with a single access type at a given time.

The procedure shown in FIGS. 5 and 6 assumes that the UE has already registered on the AMF thus unless the UE is emergency registered the AMF has already retrieved the user subscription data from the UDM.

First, procedures of FIG. 5 are described.
(1) Step 1: In order to establish a new PDU session, the UE generates a new PDU session ID.

The UE initiates the UE requested PDU session establishment procedure by the transmission of a NAS message containing a PDU Session Establishment Request message within the N1 SM container. The PDU Session Establishment Request message includes a PDU session ID, Requested PDU Session Type, a Requested session and service continuity (SSC) mode, 5GSM Capability, protocol configuration options (PCO), SM PDU DN Request Container, UE Integrity Protection Maximum Data Rate, etc.

The Request Type indicates "Initial request" if the PDU session establishment is a request to establish a new PDU session and indicates "Existing PDU Session" if the request refers to an existing PDU session switching between 3GPP access and non-3GPP access or to a PDU session handover from an existing packet data network (PDN) connection in EPC. The Request Type indicates "Emergency Request" if the PDU session establishment is a request to establish a PDU session for emergency services. The Request Type indicates "Existing Emergency PDU Session" if the request refers to an existing PDU session for emergency services switching between 3GPP access and non-3GPP access or to a PDU session handover from an existing PDN connection for emergency services in EPC.

The UE includes the S-NSSAI from the Allowed NSSAI of the current access type. If the Mapping of Allowed NSSAI was provided to the UE, the UE shall provide both the S-NSSAI of the visited PLMN (VPLMN) from the Allowed NSSAI and the corresponding S-NSSAI of the HPLMN from the Mapping Of Allowed NSSAI.

(2) Step 2: The AMF selects an SMF. If the Request Type indicates "Initial request" or the request is due to handover from EPS or from non-3GPP access serving by a different AMF, the AMF stores an association of the S-NSSAI(s), the data network name (DNN), the PDU session ID, the SMF ID as well as the Access Type of the PDU session.

If the Request Type is "initial request" and if the Old PDU session ID indicating the existing PDU session is also contained in the message, the AMF selects an SMF and stores an association of the new PDU Session ID, the S-NSSAI(s), the selected SMF ID as well as Access Type of the PDU Session.

If the Request Type indicates "Existing PDU Session", the AMF selects the SMF based on SMF-ID received from UDM. The AMF updates the Access Type stored for the PDU session.

If the Request Type indicates "Existing PDU Session" referring to an existing PDU session moved between 3GPP access and non-3GPP access, then if the serving PLMN S-NSSAI of the PDU session is present in the Allowed NSSAI of the target access type, the PDU session establishment procedure can be performed in the following cases:
- the SMF ID corresponding to the PDU session ID and the AMF belong to the same PLMN;
- the SMF ID corresponding to the PDU session ID belongs to the HPLMN;

Otherwise the AMF shall reject the PDU session establishment request with an appropriate reject cause.

The AMF shall reject a request coming from an emergency registered UE and the Request Type indicates neither "Emergency Request" nor "Existing Emergency PDU Session".

(3) Step 3: If the AMF does not have an association with an SMF for the PDU session ID provided by the UE (e.g., when Request Type indicates "initial request"), the AMF invokes Create SM Context Request procedure (e.g., Nsmf_PDUSession_CreateSMContext Request). If the AMF already has an association with an SMF for the PDU session ID provided by the UE (e.g., when Request Type indicates "existing PDU Session"), the AMF invokes Update SM Context Request procedure (e.g., Nsmf_PDUSession_UpdateSMContext Request).

The AMF sends the S-NSSAI of the serving PLMN from the Allowed NSSAI to the SMF. For roaming scenario in local breakout (LBO), the AMF also sends the corresponding S-NSSAI of the HPLMN from the Mapping Of Allowed NSSAI to the SMF.

The AMF ID is the UE's GUAMIwhich uniquely identifies the AMF serving the UE. The AMF forwards the PDU session ID together with the N1 SM container containing the PDU Session Establishment Request message received from the UE. The generic public subscription identifier (GPSI) shall be included if available at AMF.

The AMF provides the PEI instead of the SUPI when the UE in limited service state has registered for emergency services without providing a SUPI. In case the UE in limited service state has registered for Emergency services with a SUPI but has not been authenticated, the AMF indicates that the SUPI has not been authenticated. The SMF determines that the UE has not been authenticated when it does not receive a SUPI for the UE or when the AMF indicates that the SUPI has not been authenticated.

The AMF may include a PCF ID in the Nsmf_PDUSession_CreateSMContext Request. This PCF ID identifies the home PCF (H-PCF) in the non-roaming case and the visited PCF (V-PCF) in the LBO roaming case.

(4) Step 4: If session management subscription data for corresponding SUPI, DNN and S-NSSAI of the HPLMN is not available, then SMF may retrieve the session management subscription data from the UDM and subscribes to be notified when this subscription data is modified.

(5) Step 5: The SMF transmits either Create SM Context Response message (e.g., Nsmf_PDUSession_CreateSMContext Response) or Update SM Context Response message (e.g., Nsmf_PDUSession_UpdateSMContext Response) to the AMF, depending on the request received in step 3.

If the SMF received Nsmf_PDUSession_CreateSMContext Request in step 3 and the SMF is able to process the PDU session establishment request, the SMF creates an SM context and responds to the AMF by providing an SM Context ID.

When the SMF decides to not accept to establish a PDU session, the SMF rejects the UE request via NAS SM signaling including a relevant SM rejection cause by responding to the AMF with Nsmf_PDUSession_CreateSMContext Response. The SMF also indicates to the AMF that the PDU session ID is to be considered as released, the SMF proceeds to step 20 below and the PDU session establishment procedure is stopped.

(6) Step 6: Optional secondary authentication/authorization may be performed.

(7a) Step 7a: If dynamic policy and charging control (PCC) is to be used for the PDU session, the SMF may perform PCF selection.

(7b) Step 7b: The SMF may perform an SM Policy Association Establishment procedure to establish an SM Policy association with the PCF and get the default PCC rules for the PDU session.

(8) Step 8: The SMF selects one or more UPFs.

(9) Step 9: The SMF may perform an SMF initiated SM Policy Association Modification procedure to provide information on the policy control request trigger condition(s) that have been met.

(10) Step 10: If Request Type indicates "initial request", the SMF may initiate an N4 Session Establishment procedure with the selected UPF. Otherwise, the SMF may initiate an N4 Session Modification procedure with the selected UPF

In step 10a, the SMF may send an N4 Session Establishment/Modification Request to the UPF and provides packet detection, enforcement and reporting rules to be installed on the UPF for this PDU session. In step 10b, the UPF may acknowledge by sending an N4 Session Establishment/Modification Response.

(11) Step 11: The SMF transmits a N1N2Message Transfer message (e.g., Namf_Communication_N1N2MessageTransfer) to the AMF.

The N1N2Message Transfer message may include N2 SM information. The N2 SM information carries information that the AMF shall forward to the (R)AN which may include:
- The CN Tunnel Info: Core network address(es) of the N3 tunnel corresponding to the PDU session;
- One or multiple quality of service (QoS) profiles and the corresponding QoS flow IDs (QFIs);
- The PDU session ID: indicate to the UE the association between (R)AN resources and a PDU session for the UE.
- S-NSSAI with the value for the serving PLMN (i.e., the HPLMN S-NSSAI or, in LBO roaming case, the VPLMN S-NSSAI).
- User Plane Security Enforcement information determined by the SMF.
- If the User Plane Security Enforcement information indicates that integrity protection is "Preferred" or "Required", the SMF also includes the UE Integrity Protection Maximum Data Rate as received in the PDU Session Establishment Request message.
- Redundancy sequence number (RSN) parameter

The N1N2Message Transfer message may include N1 SM container. The N1 SM container contains the PDU Session Establishment Accept message that the AMF shall provide to the UE. The PDU Session Establishment Accept message includes S-NSSAI from the Allowed NSSAI. For LBO roaming scenario, the PDU Session Establishment Accept message includes the S-NSSAI from the Allowed NSSAI for the VPLMN and also it includes the corresponding S-NSSAI of the HPLMN from the Mapping Of Allowed NSSAI that SMF received in step 3.

Multiple QoS Rules, QoS flow level, QoS parameters if needed for the QoS Flow(s) associated with those QoS rule(s) and QoS Profiles may be included in the PDU Session Establishment Accept message within the N1 SM container and in the N2 SM information.

If the PDU session establishment failed anywhere between step 5 and step 11, then the N1N2Message Transfer message shall include the N1 SM container with a PDU Session Establishment Reject message and shall not include any N2 SM information. The (R)AN sends the NAS message containing the PDU Session Establishment Reject message to the UE. In this case, steps 12-17 are skipped.

(12) Step 12: The AMF sends the NAS message containing PDU Session ID and PDU Session Establishment Accept message targeted to the UE and the N2 SM information received from the SMF within the N2 PDU Session Request message to the (R)AN.

(13) Step 13: The (R)AN may issue AN specific signaling exchange with the UE that is related with the information received from SMF. For example, in case of a NG-RAN, an RRC connection reconfiguration may take place with the UE establishing the necessary NG-RAN resources related to the QoS rules for the PDU session request received in step 12.

The (R)AN forwards the NAS message (PDU Session ID, N1 SM container (PDU Session Establishment Accept message)) provided in step 12 to the UE. The (R)AN shall only provide the NAS message to the UE if the AN specific signaling exchange with the UE includes the (R)AN resource additions associated to the received N2 command.

If the N2 SM information is not included in the step 11, then the following steps 14 to 16b and step 17 are omitted.

Now, procedures of FIG. 6, which follow the procedures of FIG. 5, are described.

(14) Step 14: The (R)AN transmits a N2 PDU Session Response message to the AMF. The N2 PDU Session Response message may include PDU session ID, Cause, N2 SM information (PDU Session ID, AN Tunnel Info, List of accepted/rejected QFI(s), User Plane Enforcement Policy Notification)), etc.

(15) Step 15: The AMF transmits an Update SM Context Request message (e.g., Nsmf_PDUSession_UpdateSMContext Request) to the SMF. The AMF forwards the N2 SM information received from (R)AN to the SMF.

(16a) Step S16a: The SMF initiates an N4 Session Modification procedure with the UPF. The SMF provides AN Tunnel Info to the UPF as well as the corresponding forwarding rules.

(16b) Step S16b: The UPF provides an N4 Session Modification Response to the SMF.

After this step, the UPF may deliver any DL packets to the UE that may have been buffered for this PDU session.

(16c) Step 16c: If the SMF has not yet registered for this PDU session, then the SMF may register with the UDM for a given PDU Session.

(17) Step 17: The SMF transmits an Update SM Context Response message (e.g., Nsmf_PDUSession_UpdateSMContext Response) to the AMF.

After this step, the AMF forwards relevant events subscribed by the SMF.

(18) Step 18: If during the procedure, any time after step 5, the PDU session establishment is not successful, the SMF may inform the AMF by invoking Nsmf_PDUSession_SMContextStatusNotify (Release). The SMF may also release any N4 session(s) created, any PDU session address if allocated (e.g., IP address) and release the association with PCF, if any. In this case, step 19 is skipped.

(19) Step 19: In the case of PDU Session Type IPv6 or IPv4v6, the SMF may generate an IPv6 Router Advertisement and send it to the UE.

(20) Step 20: The SMF may perform SMF initiated SM Policy Association Modification.

(21) Step 21: If the PDU Session establishment failed after step 4, the SMF may unsubscribe to the modifications of session management subscription data, if the SMF is no more handling a PDU session of the UE.

### <Redundant PDU Session>

In order to support highly reliable URLLC (ultra reliable and low latency communication) service, the terminal may set up two redundant PDU sessions over the 5G network. It may be used for applications that require reliability. Two PDU sessions may be established and managed by different network nodes. The same data may be transmitted through the two PDU sessions.

The 5GS may set up the user plane paths of the two redundant PDU Sessions to be disjoint. The user's subscription indicates if user is allowed to have redundant PDU Sessions and this indication may be provided to SMF from UDM.

RAN supports dual connectivity, and there may be sufficient RAN coverage for dual connectivity in the target area. UEs may support dual connectivity. The core network UPF deployment may be aligned with RAN deployment and may support redundant user plane paths. The underlying transport topology may be aligned with the RAN and UPF deployment and may support redundant user plane paths. The physical network topology and geographical distribution of functions may also support the redundant user plane paths to the extent deemed necessary by the operator. The operation of the redundant user plane paths may be made sufficiently independent, to the extent deemed necessary by the operator.

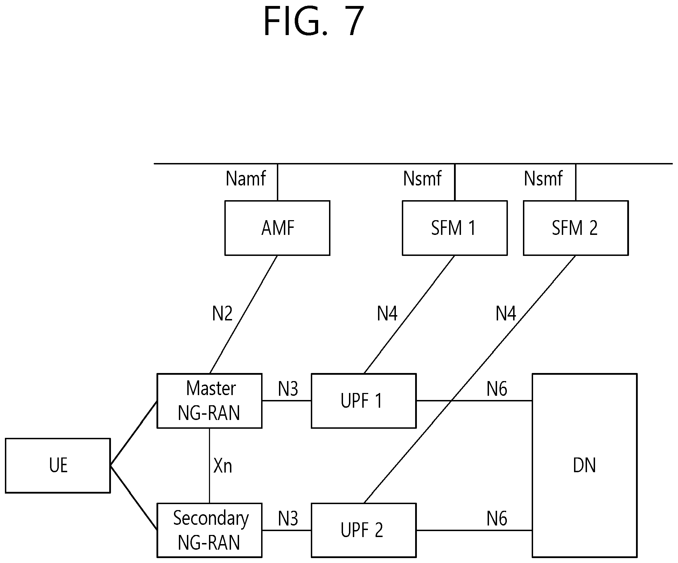

**FIG. 7** **shows an example of a redundant user plane path using dual connectivity.**

FIG. 7 illustrates an example user plane resource configuration of dual PDU Sessions when redundancy is applied. One PDU Session spans from the UE via Master NG-RAN to UPF1 acting as the PDU Session Anchor, and the other PDU Session spans from the UE via Secondary NG-RAN to UPF2 acting as the PDU Session Anchor. NG-RAN may realize redundant user plane resources for the two PDU Sessions with two NG-RAN nodes (i.e. Master NG-RAN and Secondary NG-RAN) or a single NG-RAN node. In both cases, there is a single N1 interface towards AMF.

Based on these two PDU Sessions, two independent user plane paths may be set up. UPF1 and UPF2 connect to the same Data Network (DN), even though the traffic via UPF1 and UPF2 may be routed via different user plane nodes within the DN.

In order to establish two redundant PDU Sessions and associate the duplicated traffic coming from the same application to these PDU Sessions, URSP or UE local configuration may used.

Using URSP, duplicated traffic from the application, associated to the redundant PDU Sessions, is differentiated by two distinct traffic descriptors, each in a distinct URSP rule. These traffic descriptors need to have different DNNs, IP descriptors or non-IP descriptors (e.g. MAC address, VLAN ID), so that the two redundant PDU Sessions are matched to the Route Selection Descriptors of distinct URSP rules.

The redundant user plane set up may applie to both IP and Ethernet PDU Sessions.

Support of redundant PDU Sessions include:
- UE may initiate two redundant PDU Sessions and may provide different combination of DNN and S-NSSAI for each PDU Session.
- The SMF may determine whether the PDU Session is to be handled redundantly. The determination is based on the indication that redundant PDU Session is required provided by PCF for the PDU Session, if dynamic PCC (Policy and Charging Control) applies for the PDU Session or the combination of the S-NSSAI, DNN, user subscription and local policy configuration in the SMF if dynamic PCC is not used for the PDU Session. If the PDU session is to be handled redundantly, the SMF uses S-NSSAI, DNN to determine the RSN value which differentiates the PDU Sessions that are handled redundantly and indicates redundant user plane requirements for the PDU Sessions in NG-RAN.
- Operator configuration of UPF selection may ensures the appropriate UPF selection for disjoint paths.
- At establishment of the PDU Sessions or at transitions to CM-CONNECTED state, the RSN parameter may indicate to NG-RAN that redundant user plane resources shall be provided for the given PDU Sessions by means of dual connectivity. The value of the RSN parameter may indicate redundant user plane requirements for the PDU Sessions. This request for redundant handling may be made by indicating the RSN to the NG-RAN node on a per PDU Session granularity. PDU Sessions associated with different RSN values shall be realized by different, redundant UP resources. Based on the RSN and RAN configuration, the NG-RAN sets up dual connectivity so that the sessions have end to end redundant paths. When there are multiple PDU Sessions with the RSN parameter set and with different values of RSN, this indicates to NG-RAN that CN is requesting dual connectivity to be set up and the user plane shall be handled as indicated by the RSN parameter and the associated RAN configuration. If the RSN value is provided to the NG-RAN, NG-RAN shall consider the RSN value when it associates the PDU Sessions with NG-RAN UP.

The decision to set up dual connectivity may remain in NG-RAN. NG-RAN may take into account the additional request for the dual connectivity setup provided by the CN.
- Using NG-RAN local configuration, NG-RAN may determine whether the request to establish RAN resources for a PDU Session is fulfilled or not considering user plane requirements indicated by the RSN parameter by means of dual connectivity. If the request to establish RAN resources for PDU Session can be fulfilled by the RAN, the PDU Session may be established even if the user plane requirements indicated by RSN cannot be satisfied. If the NG-RAN determines the request to establish RAN resources cannot be fulfilled then it shall reject the request which eventually triggers the SMF to reject the PDU Session establishment towards the UE. The decision for each PDU Session may be taken independently. That is, rejection of a PDU Session request shall not release the previously established PDU Session. The RAN shall determine whether to notify the SMF if the RAN resources indicated by the RSN parameter can no longer be maintained and SMF can use that to determine if the PDU Session should be released.
- In the case of Ethernet PDU Sessions, the SMF has the possibility to change the UPF (acting as the PSA) and the Secondary NG-RAN is modified (or added/released), using the Ethernet PDU Session Anchor Relocation procedure.
- The SMF's charging record may reflect the RSN information.
- The RSN indication is transferred from Source NG-RAN to Target NG-RAN in the case of handover.

### <Problems to be solved in the disclosure of the present specification>

The terminal and the network may create redundant PDU sessions for communication. When a redundant PDU session is established, redundant transmission may be performed.

For this redundant transmission, the terminal may include the PDU session pair ID in the PDU session establishment request message.

When resources are allocated for redundant PDU sessions and disjoint UP paths are allocated for each session, redundant transmission can be performed.

However, the network may fail to allocate disjoint UP paths. Additionally, although resources for redundant PDU sessions have been allocated, allocation of disjoint UP paths may fail. For example, in the process of allocating disjoint UP paths for two redundant PDU sessions in NG-RAN, when a secondary node or CU-UP may create a second redundant PDU session, since it does not know the RSN (Retransmission Sequence Number) information used in the first redundant PDU session, the same RSN information may be used for two redundant PDU sessions. Therefore, it may be failed to allocate disjoint UP paths.

In this case, conventionally, the terminal cannot know the result of whether the disjoint UP paths have been successfully allocated to two PDU sessions for redundant transmission.

Therefore, even if it fails to allocate a disjoint UP path for one session among two PDU sessions, the terminal continues to maintain the two PDU sessions for redundant transmission, which results in wasting unnecessary resources.

### <Disclosure of this specification>

In some of the service operations between core NFs (core network functions) described below, new service operations may be defined and used. Additionally, in some of the N2 messages between AMF and NG-RAN described below, new N2 messages may be defined and used. Additionally, new RRC messages may be defined and used in some of the RRC messages between NG-RAN and UE described below.

In the procedures below, certain steps may be performed simultaneously, in parallel, or in an alternate order.

The drawings to be described later may be executed individually or together with other drawings.

The following drawings were prepared to explain a specific example of the present specification. Since the names of specific devices or specific signals/messages/fields described in the drawings are provided as examples, the technical features of this specification are not limited to the specific names used in the drawings below.

### 1. First embodiment

**FIG. 8** **and** **FIG. 9** **show the first embodiment of the present specification.**

According to the first embodiment of the present specification disclosed in FIG. 8 and FIG. 9, the SMF may inform the terminal whether disjoint UP paths have been successfully allocated for two PDU sessions for redundant transmission.. Based on this, the terminal may trigger the PDU session release procedure.

Basically, it is assumed that SMF #1 and SMF #2 are each responsible for two redundant PDU sessions, but it may also be applied when one SMF is responsible for both PDU sessions.

Step 0) Related information (e.g., RSN, PDU session Pair ID, DNN, S-NSSAI, etc. to be used to transmit the traffic) may be pre-configured inside the terminal to enable redundant transmission of traffic of a specific application. Alternatively, the terminal may be configured, by the PCF, URSP rules for redundant transmission during the process of registering with the network.

Based on the information, the terminal may decide to create a redundant PDU session for redundant transmission of traffic of a specific application.

Step 1) The terminal may transmit, to the network, PDU session establishment request message including PDU session Pair ID information, DNN (data network name) and S-NSSAI (Single Network Slice Selection Assistance Information) to create the first PDU session for Redundant transmission. If the UE can add RSN information based on UE Local Configuration or URSP rules, the RSN information may also be included and transmitted in the PDU session establishment request message.

Step 2) SMF #1 may determine RSN for the corresponding PDU session, based on the PDU session Pair ID received from the terminal, the indication (that redundant transmission is needed) received from the PCF, or the DNN/S-NSSAI combination and local policy configuration within the SMF, etc.

If the terminal transmits RSN information in the PDU session establishment request message in step 1, SMF #1 may skip step 2. In this case, the RSN value received from the terminal may be transmitted to the NG-RAN in step 3.

Step 3) SMF #1 may send a PDU session resource setup request message to NG-RAN.

SMF #1 may request NG-RAN to allocate resource for the corresponding PDU session through AMF. At this time, SMF #1 may transmit the PDU session Pair ID and RSN information to the NG-RAN through AMF. Additionally, the PDU session resource setup request message may also include a PDU session establishment accept message to be delivered to the terminal.

Step 4) Steps 13 to 21 described in FIGS. 5 and 6, which are the remaining steps of the PDU session establishment procedure, may be performed.

In this process, if the NG-RAN allocates the UP path using an RSN value different from the RSN received from SMF #1 in step 3, the corresponding RSN value may also be notified to SMF #1.

Step 5) The terminal may transmit a PDU session establishment request message including PDU session pair ID information, DNN, and S-NSSAI to the network to eastablish a second PDU session for redundant transmission. If the terminal may add RSN information based on UE Local Configuration or URSP rules, the RSN information may also be included and transmitted in the PDU session establishment request message.

The terminal may transmit the same PDU session Pair ID value for the PDU session created in steps 1 to 4 and the PDU session to be created in step 5. Through the same PDU session Pair ID, the terminal may inform the network that two PDU sessions are associated for redundant transmission. Additionally, if the terminal includes an RSN value in the PDU session establishment request message, the RSN value included in step 1 and the RSN value included in step 5 for the same application may be different.

Step 6) SMF #2 may determine the RSN for the corresponding PDU session, based on the PDU session Pair ID received from the terminal, the indication (that redundant transmission is needed) received from the PCF, or the DNN/S-NSSAI combination and local policy configuration within the SMF, etc.

If the UE transmits the PDU session establishment request message including RSN information in step 5, SMF #2 may skip step 6 and transmit the RSN value received from the UE to the NG-RAN in step 7.

Step 7) SMF #2 may request NG-RAN to allocate resource for the corresponding PDU session through AMF. At this time, the PDU session Pair ID and RSN information may be delivered to the NG-RAN through AMF. Additionally, the message may also include a PDU Session Establishment Accept message to be delivered to the terminal.

Step 8) NG-RAN may attempt to allocate disjoint UP Paths for two PDU sessions for redundant transmission. For this purpose, dual connectivity may be used, where the master node and secondary node are each responsible for one among the two PDU session, or NG-RAN may attempt to allocate disjoint UP paths by using two DUs within one NG-RAN.

In the case of dual connectivity, the first embodiment of the present specification may be combined with the remaining parts excluding the overlapping parts with the fourth embodiment of the present specification, which will be described later. However, in the content of step 5 of the fourth embodiment of the present specification, which will be described later, informing the terminal that the disjoint UP path allocation has failed cannot be combined with the first embodiment.

Alternatively, when two DUs are used within one NG-RAN, the first embodiment of the present specification may be combined with the remaining parts excluding the overlapping parts with the third embodiment of the present specification, which will be described later. However, in the content of step 7 of the third embodiment of the present specification, which will be described later, informing the terminal that the disjoint UP path allocation has failed cannot be combined with the first embodiment.

NG-RAN may attempt to allocate disjoint UP Paths after the second PDU session is created, that is, after step 11.

Step 9) If NG-RAN decides to accept resource allocation for the PDU session according to SMF #2 request, NG-RAN may forward the PDU session establishment accept message received from SMF #2 in step 7 to the UE.

Step 10) NG-RAN may transmit, to SMF #2, a PDU session resource setup response message including whether resource allocation for the corresponding PDU session is successful. In this process, if the NG-RAN allocates a UP path using an RSN value different from the RSN received from SMF #2 in step 7, the corresponding RSN value may be notified to SMF #2.

Additionally, if it is failed to allocate a Disjoint UP Path to the PDU session created in steps 1 to 4 and the PDU session currently being created, the NG-RAN may transmit, to SMF #2, the PDU session resource setup response message including Disjoint UP Path Failure Indication.

Or, after completing the establishment of the second PDU session, NG-RAN may inform, to SMF #1 or SMF #2 or both, that allocating a Disjoint UP Path for the current PDU session is failed, through a separate NGAP message.

NG-RAN may calculate the time value until a new PDU session can be established in case the SMF or the terminal chooses to release the corresponding PDU session and transmit the timer value to the SMF.

Step 11) Steps 16a to 21 described in FIGS. 5 and 6, which are the remaining steps of the PDU session establishment procedure, may be performed.

Step 12) If the SMF receives a Disjoint UP Path Failure Indication from the NG-RAN in step 10, the SMF sends, to the UE, a PDU Session Modification Command message including the Disjoint UP Path Failure Indication. Through this, the terminal may know that allocation of disjoint UP paths for two PDU sessions for redundant transmission has failed.

If the UE selects to release the PDU session and SMF #2 receives the timer value from NG-RAN in step 10, for preventing an attempt to establish a new PDU session for redundant transmission for a certain period of time, SMF may set the timer value as a back-off timer. Alternatively, the value in local configuration within the SMF may be set as a back-off timer. SMF #2 may deliver, to the terminal, the set back-off timer with a Disjoint UP Path Failure Indication.

Step 13) The terminal may respond to the network through a PDU session modification command Ack message.

Step 14) Based on the Disjoint UP Path Failure Indication received in step 12, the terminal may determine whether the terminal maintains two PDU sessions or release one PDU session even if allocating disjoint UP path is failed. If the terminal determine to release one PDU session, the terminal may start a PDU Session Release procedure.

If a back-off timer is received from the SMF in step 12, the terminal may not attempt to establish a new PDU session for redundant transmission during that time. Or, if the back-off timer value is locally configured inside the terminal and the Disjoint UP Path Failure Indication is received in step 12, the terminal may not attempt to establish a new PDU session for redundant transmission during that time.

Additionally, through the Disjoint UP Path Failure Indication received in step 12, the terminal may not attempt to establish new PDU session using a URSP rule with a lower priority rather than the URSP rule currently used for the traffic of the application.

### 2. Second embodiment

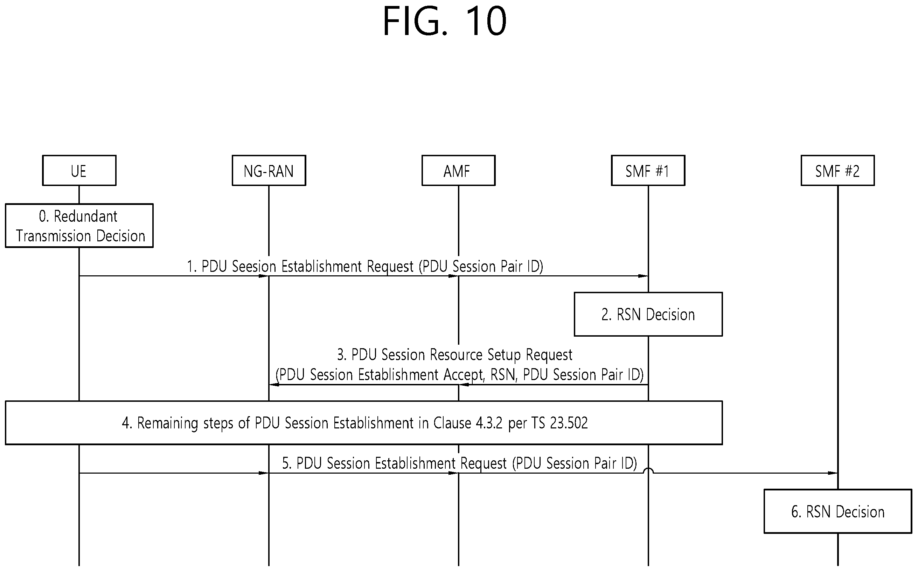

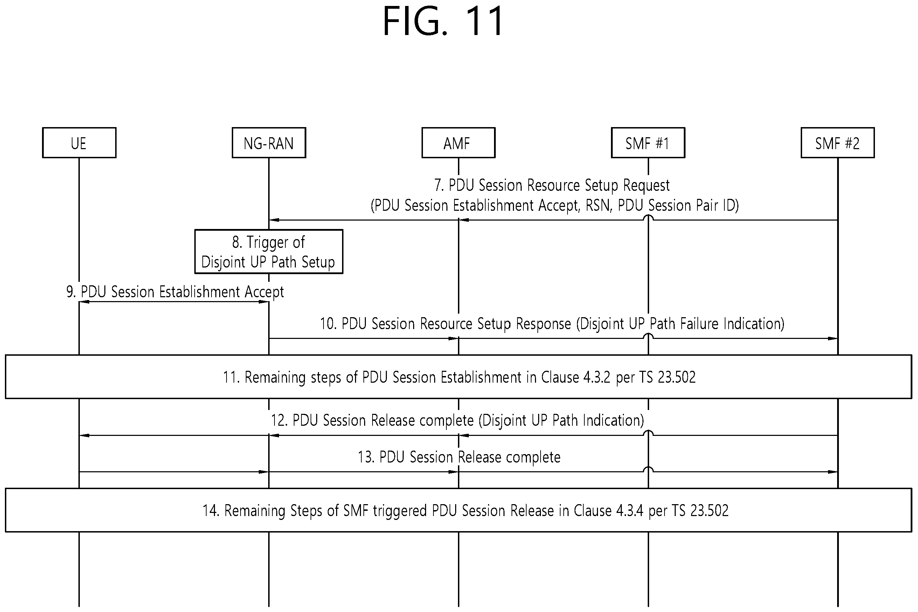

**FIGS. 10** **and** **11** **show a second embodiment of the present specification.**

According to the second embodiment of the present specification disclosed in FIGS. 10 and 11, the SMF determines whether disjoint UP paths have been successfully allocated to two PDU sessions for redundant transmission. Then, based on this, SMF may trigger PDU session release.

Basically, it is assumed that SMF #1 and SMF #2 are each responsible for two redundant PDU sessions, but it can also be applied when one SMF is responsible for both PDU sessions.

Steps 0-11) Steps 0-11 of the first embodiment of the present specification described above may be referred to.

Step 12) SMF #2 may transmit a PDU session release command message to the terminal.

Based on the Disjoint UP Path Failure Indication received from the NG-RAN in step 10, the SMF may determine whether to keep the two PDU sessions or one of the two PDU sessions even if Disjoint UP Paths have not allocated. If the SMF determines to release one PDU session, the SMF may initiate a PDU Session Release procedure.

At this time, SMF#2 may transmit a Disjoint UP Path Failure Indication to the terminal by including it in the PDU session release command message to inform the terminal of the reason for releasing the PDU session. Through this, the terminal may know that allocation of disjoint UP paths for two PDU sessions for redundant transmission has failed.

If SMF #2 selects release for the corresponding PDU session and SMF #2 receives the timer value from NG-RAN in step 10, for preventing an attempt to establish a new PDU session for redundant transmission for a certain period of time, SMF may set the timer value as a back-off timer. Alternatively, the value in local configuration within the SMF may be set as a back-off timer. SMF #2 may deliver, to the terminal, the set back-off timer with a Disjoint UP Path Failure Indication.

If a back-off timer is received from the SMF in step 12, the terminal may not attempt to establish a new PDU session for redundant transmission during that time. Or, if the back-off timer value is locally configured inside the terminal and the Disjoint UP Path Failure Indication is received in step 12, the terminal may not attempt to establish a new PDU session for redundant transmission during that time.

Additionally, through the Disjoint UP Path Failure Indication received in step 12, the terminal may not attempt to establish new PDU session using a URSP rule with a lower priority rather than the URSP rule currently used for the traffic of the application.

The SMF may not select release for the corresponding PDU session and may instead select deactivation. In this case, the AS layer of the terminal may inform the NAS layer that the UP connection for the corresponding PDU session has been released. Therefore, through this, the NAS layer may know that the PDU session for redundant transmission has been deactivated. An attempt to establish a new PDU session may not be performed during certain time, according to the timer value locally configured inside the terminal or the timer value assigned during the registration process from the network.

Step 13) The terminal may respond to the network through a PDU Session Release Complete message.

Step 14) The remaining steps from the PDU session release procedure shown in Clause 4.3.4 of TS 23.502 V16.8.0 (2021-03) may be performed.

### 3. Third embodiment

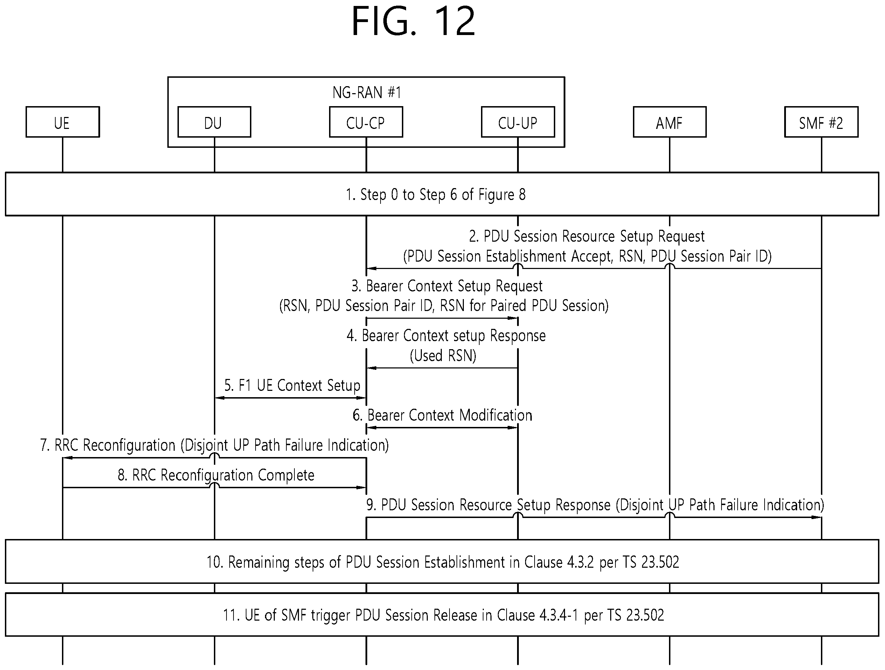

**FIG. 12** **shows a third embodiment of the present specification.**

According to the third embodiment of the present specification disclosed in FIG. 12, the NG-RAN may inform the UE whether disjoint UP paths have been successfully allocated to two PDU sessions for overlapping transmission. Based on this, the terminal or SMF may trigger PDU session release.

Basically, it is assumed that SMF #1 and SMF #2 are each responsible for two redundant PDU sessions, but it can also be applied when one SMF is responsible for both PDU sessions.

Also, it is assumed that only NG-RAN #1 is separated into CU-CP, CU-UP, and DU, and that disjoint UP paths are provided using two DUs without another NG-RAN #2. However, with both NG-RAN #1 and NG-RAN #2 separated into CU-CP, CU-UP, and DU, a disjoint UP path may be provided by taking charge of each PDU session. Additionally, NG-RAN #1 and NG-RAN #2 may each provide Disjoint UP paths.

Step 1) The terminal may attempt to establish PDU sessions for redundant transmission according to steps 0-6 of the first embodiment of the present specification described above.

Step 2) SMF #2 may send a PDU session resource setup request message to NG-RAN #1.

SMF #2 may request NG-RAN to allocate resource for the corresponding PDU session through AMF. At this time, the PDU session Pair ID and RSN information may be delivered to the NG-RAN through AMF. Additionally, the PDU session resource establishment request message may also include a PDU session establishment accept message to be delivered to the terminal.

Step 3) CU-CP may attempt to allocate disjoint UP paths for two PDU sessions for redundant transmission. Therefore, the CU-CP may request bearer allocation for the second PDU session by sending a Bearer Context Setup Request message including the RSN and PDU session Pair ID to the CU-UP. At this time, CU-CP may also transmit the RSN value assigned to the first PDU session to CU-UP. Through this, when CU-UP fails to allocate a UP path according to the RSN requested by SMF #2 and selects a different RSN value, the CU-UP may select the RSN value for the second PDU session by considering the RSN value used in the first PDU session..

Step 4) If the CU-UP succeeds in allocating a bearer for the corresponding PDU session, the CU-UP may respond to the CU-CP with a Bearer Context Setup Response message. At this time, CU-UP may also transmit the RSN value used for the corresponding PDU session.

Based on the response of CU-UP, CU-CP may determine whether disjoint UP paths are allocated for two PDU sessions for redundant transmission.

Step 5) The CU-CP may request resource allocation for the corresponding PDU session to the DU through the F1 UE Context Setup procedure.

In order to allocate disjoint UP paths for two PDU sessions for redundant transmission, the CU-CP may transmit, to the DU, F1 UE Context Setup Request message including RSN and PDU session Pair ID to request UE context allocation for the second PDU session. At this time, the RSN value assigned to the first PDU session may also be transmitted. Through this, when the DU fails to allocate the UP path according to the RSN requested by SMF #2 and selects a different RSN value, the DU may select the RSN value for the second PDU session by considering the RSN value used in the first PDU session.

Step 6) CU-CP may transmit F1 DL TNL (Transport Network Layer) address information to CU-UP through the Bearer Context Modification procedure.

Step 7) NG-RAN #1 may deliver bearer information for the second PDU session to the UE through RRC reconfiguration. At this time, the PDU Session Establishment Accept message transmitted by SMF #2 in step 2 may also be delivered.

Additionally, if it is determined that allocation of disjoint UP paths for two PDU sessions for redundant transmission has failed (e.g., if the RSN values assigned by NG-RAN for the two PDU sessions are the same), this may be notified to the terminal as well.

Step 8) If the terminal succeeds in bearer setup according to the reconfiguration received in step 7, it may respond to NG-RAN #1 with an RRC Reconfiguration Complete message.

Step 9) NG-RAN may inform SMF #2 whether resource allocation for the corresponding PDU session was successful. In this process, if the NG-RAN allocates the UP path using an RSN value different from the RSN received from SMF #2 in step 2, the corresponding RSN value may be notified to SMF #2.

Additionally, if it fails to allocate a disjoint UP path for the first PDU session that has already been created and the second PDU session that is currently being created, this may be notified to SMF #2 as well.

Or, after finishing establishment for the second PDU session, NG-RAN may send a separate NGAP message to inform SMF #1 and/or SMF #2 that allocating disjoint UP paths for the two PDU sessions has been failed.

Step 10) Steps 16a to 21 described in FIGS. 5 and 6, which are the remaining steps of the PDU session establishment procedure, may be performed.

Step 11) Based on the Disjoint UP Path Failure Indication received by the terminal in step 7, the terminal may determine whether the terminal maintains two PDU sessions or release one PDU session even if disjoint UP paths have not been allocated. If the terminal determine to release one PDU session, the terminal may start a PDU Session Release procedure.

Alternatively, the SMF may determine to release the PDU session based on the Disjoint UP Path Failure Indication received in step 9.

The SMF may not select release for the corresponding PDU session and may instead select deactivation. In this case, the AS layer of the terminal may inform the NAS layer that the UP connection for the corresponding PDU session has been released. Therefore, through this, the NAS layer may know that the PDU session for redundant transmission has been deactivated. An attempt to establish a new PDU session may not be performed during certain time, according to the timer value locally configured inside the terminal or the timer value assigned during the registration process from the network.

### 4. Fourth embodiment

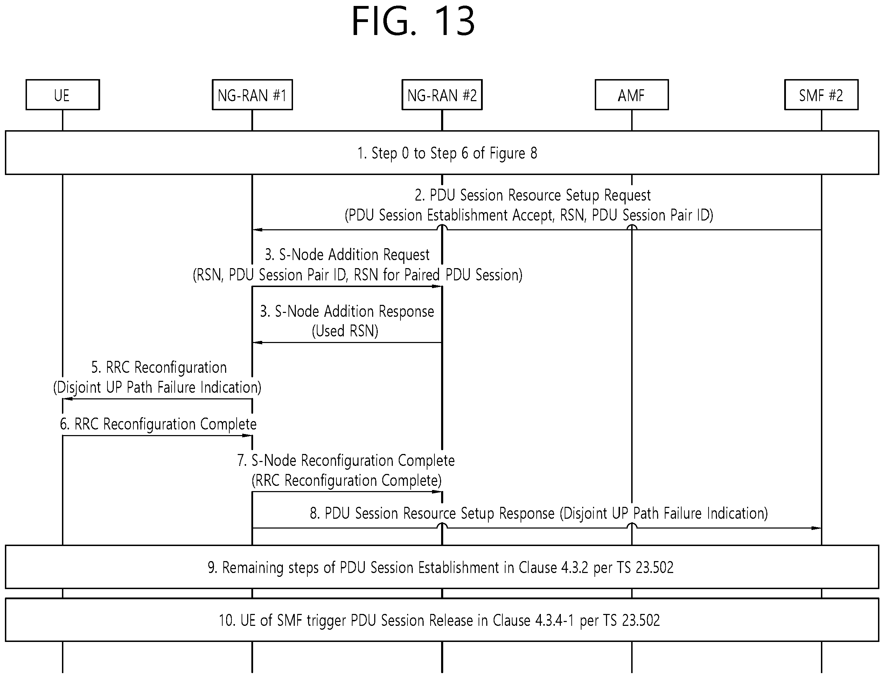

**FIG. 13** **shows the fourth embodiment of the present specification.**

According to the fourth embodiment of the present specification disclosed in FIG. 13, the NG-RAN informs the terminal whether disjoint UP paths has been successfully allocated to two PDU sessions for redundant transmission. Based on this, the terminal or SMF may trigger PDU session release.

Basically, it is assumed that SMF #1 and SMF #2 are each responsible for two redundant PDU sessions, but it can also be applied when one SMF is responsible for both PDU sessions.

NG-RAN #1 is divided into CU-CP, CU-UP and DU, and may provide disjoint UP paths using two DUs of NG-RAN #1 without another NG-RAN #2. In addition, with both NG-RAN #1 and NG-RAN #2 separated into CU-CP, CU-UP, and DU, a disjoint UP path may be provided by taking charge of each PDU session. Additionally, NG-RAN #1 and NG-RAN #2 may each provide Disjoint UP paths.

Step 1) The terminal may attempt to establish PDU sessions for redundant transmission according to steps 0-6 of the first embodiment of the present specification described above.

Step 2) SMF #2 may send a PDU session resource setup request message to NG-RAN #1.

SMF #2 may request NG-RAN to allocate resource for the corresponding PDU session through AMF. At this time, the PDU session Pair ID and RSN information may be delivered to the NG-RAN through AMF. Additionally, the PDU session resource establishment request message may also include a PDU session establishment accept message to be delivered to the terminal.

Step 3) NG-RAN #1 may attempt to allocate disjoint UP paths for two PDU sessions for redundant transmission. Therefore, resource allocation for the second PDU session may be requested by sending an S-Node Addition Request message to NG-RAN #2. At this time, the RSN value assigned for the first PDU session may also be transmitted. Through this, when NG-RAN #2 fails to allocate an UP path according to the RSN requested by SMF #2 and selects a different RSN value, NG-RAN #2 may determine the RSN value for the 2nd PDU session considering the RSN value used in the first PDU session.

In the process of NG-RAN allocating disjoint UP paths for PDU sessions for redundant transmission, the NG-RAN may use the RSN information allocated to the paired PDU session together to create a UP path as disjoint as possible.

Step 4) If NG-RAN #2 succeeds in allocating resources for the corresponding PDU session, it may respond to NG-RAN #1 with an S-Node Addition Response message. At this time, NG-RAN #2 may also transmit the RSN value used for the corresponding PDU session.

Step 5) NG-RAN #1 may deliver bearer information for the 2nd PDU session to the UE through RRC reconfiguration. At this time, the PDU Session Establishment Accept message sent by SMF #2 in step 2 may also be delivered.

Additionally, if it is determined that allocation of disjoint UP paths for two PDU sessions for redundant transmission has failed (e.g., if the RSN values assigned by NG-RAN for the two PDU sessions are the same), this may be notified to the terminal as well.

Step 6) If the UE succeeds in bearer setup according to the reconfiguration received in step 5, it may respond to NG-RAN #1 with an RRC Reconfiguration Complete message.

Step 7) NG-RAN #1 may deliver the RRC Reconfiguration Complete message for SN received from the terminal to NG-RAN #2.

Step 8) NG-RAN #1 may inform SMF #2 whether resource allocation for the corresponding PDU session was successful. During this process, if NG-RAN #2 allocates the UP path using an RSN value different from the RSN received from SMF #2 in step 2, the corresponding RSN value may be notified to SMF #2 as well.

Additionally, if it fails to allocate a disjoint UP path for the first PDU session that has already been created and the second PDU session that is currently being created, this may be notified to SMF #2 as well.

Or, after finishing establishment for the second PDU session, NG-RAN may send a separate NGAP message to inform SMF #1 and/or SMF #2 that allocating disjoint UP paths for the two PDU sessions has been failed.

Step 9) Steps 16a to 21 described in FIGS. 5 and 6, which are the remaining steps of the PDU session establishment procedure, may be performed.

Step 10) Based on the Disjoint UP Path Failure Indication received by the terminal in step 5, the terminal may determine whether the terminal maintains two PDU sessions or release one PDU session even if disjoint UP paths have not been allocated. If the terminal determine to release one PDU session, the terminal may start a PDU Session Release procedure.

Alternatively, the SMF may determine to release the PDU session based on the Disjoint UP Path Failure Indication received in step 8.

The SMF may not select release for the corresponding PDU session and may instead select deactivation. In this case, the AS layer of the terminal may inform the NAS layer that the UP connection for the corresponding PDU session has been released. Therefore, through this, the NAS layer may know that the PDU session for redundant transmission has been deactivated. An attempt to establish a new PDU session may not be performed during certain time, according to the timer value locally configured inside the terminal or the timer value assigned during the registration process from the network.

### 5. Fifth embodiment

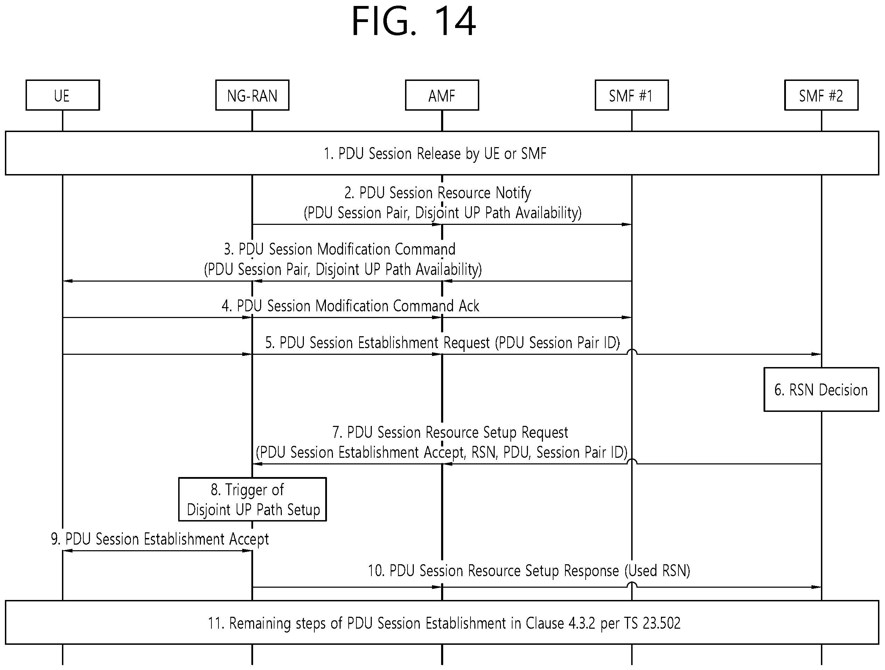

**FIG. 14** **shows the fifth embodiment of this specification.**

According to the fifth embodiment of the present specification disclosed in FIG. 14, NG-RAN may be able to allocate disjoint UP path while releasing one PDU session among two PDU sessions for redundant transmission. If this is notified, the procedure for establishing a new PDU session may be performed again.

Basically, it is assumed that SMF #1 and SMF #2 are each responsible for two redundant PDU sessions, but it can also be applied when one SMF is responsible for both PDU sessions.

Step 1) As the first to fourth embodiments of the present specification described above, it is assumed that disjoint UP paths are not allocated for two PDU sessions for redundant transmission, so the terminal or SMF released one of the two PDU sessions.

NG-RAN may continuously check whether it can provide a disjoint UP path for a new PDU session in addition to the PDU session currently in use by the UE for redundant transmission. This operation may be performed by the SMF requesting the NG-RAN in advance, or may be performed upon a request from the terminal. Alternatively, after the NG-RAN fails to allocate disjoint UP path as in the first to fourth embodiments of the present specification described above, the NG-RAN may continue to check the situation on its own.

Step 2) When it becomes possible to allocate a Disjoint UP path for a new PDU session in addition to the PDU session currently in use by the UE, NG-RAN may transmit, to the SMF #1, the NGAP message including the PDU session Pair ID and Disjoint UP Path Availability Indication. The Disjoint UP Path Availability Indication may include information that a Disjoint UP path can be allocated for a new PDU session in addition to the PDU session currently in use by the terminal.

Instead of informing the SMF of this fact, NG-RAN may directly inform the terminal using an RRC message. In this case, steps 2-4 may be omitted.

Step 3) SMF #1 may transmit, to the terminal, a PDU Session Modification Command message including the PDU Session Pair ID and Disjoint UP Path Availability Indication. Through this, the terminal may know that the terminal can establish a new PDU session for redundant transmission.

Step 4) The terminal may respond to the network through a PDU Session Modification Command Ack message.

Step 5) The terminal may transmit, to the SMF #2, a PDU Session Establishment Request message including PDU session Pair ID information, DNN, and S-NSSAI to establish a second PDU session for redundant transmission. If the UE can add RSN information based on UE Local Configuration or URSP rules, the RSN information may also be included and transmitted in the PDU Session Establishment Request message.

The terminal may inform the network that two PDU sessions are associated for redundant transmission by transmitting the same PDU session Pair ID value for the first PDU session that has been already created and the second PDU session to be created at the current stage. Additionally, when the terminal includes an RSN value in the PDU session establishment request message, the RSN value included in the PDU session establishment request message and the RSN value included in step 5 should be different from each other to create the first PDU session for the same application.

Step 6) SMF #2 may determine RSN for the corresponding PDU session, based on Pair ID received from the terminal, the indication (that redundant transmission is needed) received from the PCF, or the DNN/S-NSSAI combination and local policy configuration information within the SMF, etc.

If the UE transmits the PDU session establishment request message including RSN information in step 5, SMF #2 may skip step 6 and transmit the RSN value received from the UE to the NG-RAN in step 7.

Step 7) SMF #2 may request NG-RAN to allocate resource for the corresponding PDU session through AMF. At this time, SMF #2 may transmit the PDU session Pair ID and RSN information to the NG-RAN through AMF. Additionally, the message may include a PDU Session Establishment Accept message to be delivered to the terminal.

Step 8) NG-RAN may attempt to allocate disjoint UP Paths for two PDU sessions for redundant transmission. For this purpose, dual connectivity may be used, where the master node and secondary node are each responsible for one among the two PDU session, or NG-RAN may attempt to allocate disjoint UP paths by using two DUs within one NG-RAN.

NG-RAN may attempt to allocate a disjoint UP Path after the second PDU session is established, that is, after step 11.

Step 9) If NG-RAN decides to accept resource allocation for the PDU session according to SMF #2 request, NG-RAN may forward the PDU session establishment accept message received from SMF #2 in step 7 to the UE.

Step 10) NG-RAN may inform SMF #2 whether resource allocation for the corresponding PDU session was successful. During this process, if the NG-RAN allocates the UP path using an RSN value different from the RSN received from SMF #2 in step 7, the corresponding RSN value may also be notified to SMF #2.

Step 11) Steps 16a to 21 described in FIGS. 5 and 6, which are the remaining steps of the PDU session establishment procedure, may be performed.

### 6. Sixth Embodiment

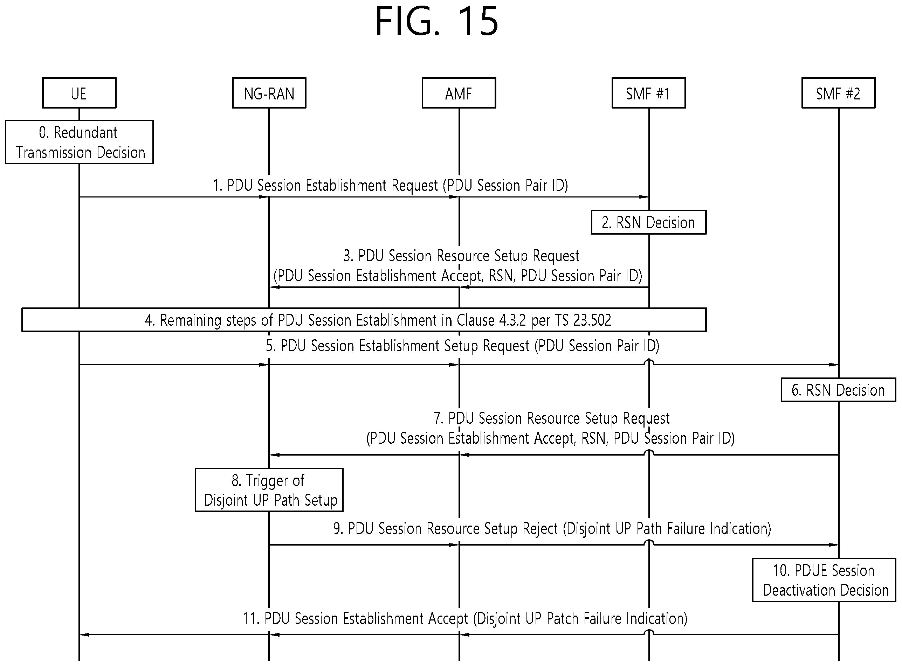

**FIG. 15** **shows the sixth embodiment of the present specification.**

According to the sixth embodiment of the present specification disclosed in FIG. 15, if it fails to allocate disjoint UP paths to two PDU sessions for redundant transmission, the NG-RAN may reject to allocate resources to the PDU session. Based on this, the SMF may deactivate the PDU session.

Basically, it is assumed that SMF #1 and SMF #2 are each responsible for two redundant PDU sessions, but it can also be applied when one SMF is responsible for both PDU sessions.

Step 0) Related information (e.g., RSN, PDU session Pair ID, DNN, S-NSSAI, etc. to be used to transmit the traffic) may be pre-configured inside the terminal to enable redundant transmission of traffic of a specific application. Alternatively, the terminal may be configured, by the PCF, URSP rules for redundant transmission during the process of registering with the network.

Based on the information, the terminal may decide to create a redundant PDU session for redundant transmission of traffic of a specific application.

Steps 1-7) Steps 1-7 of the first embodiment of the present specification described above may be referred to.

Step 8) NG-RAN may attempt to allocate disjoint UP Paths for two PDU sessions for redundant transmission. For this purpose, dual connectivity may be used, where the master node and secondary node are each responsible for one among the two PDU session, or NG-RAN may attempt to allocate disjoint UP Paths by using two DUs within one NG-RAN.

In the case of dual connectivity, the sixth embodiment of the present specification may be combined with the remaining parts excluding the overlapping parts with the fourth embodiment of the present specification, which will be described later. However, in the content of step 5 of the fourth embodiment of the present specification described above, informing the terminal that the disjoint UP Paths allocation has failed cannot be combined with the sixth embodiment.

Alternatively, when two DUs are used within one NG-RAN, the sixth embodiment of the present specification may be combined with the remaining parts excluding the overlapping parts with the third embodiment of the present specification described above. However, in the content of step 7 of the third embodiment of the present specification described above, informing the terminal that the disjoint UP Paths allocation has failed cannot be combined with the sixth embodiment.

NG-RAN may attempt to allocate disjoint UP Paths after the second PDU session is established.

Step 9) If it is not possible to allocate disjoint UP Paths for two PDU sessions for redundant transmission, NG-RAN may reject the request to establish the second PDU session even if it is possible to allocate resource for the corresponding PDU session. At this time, the NG-RAN may transmit, to the SMF #2, PDU Session Resource Setup Reject message including a Disjoint UP Path Failure Indication to inform.

NG-RAN may calculate the time value until a new PDU session can be established and transmit the timer value to the SMF.

If disjoint UP Paths cannot be allocated to two PDU sessions for redundant transmission, but resource allocation for the PDU sessions is possible, NG-RAN may accept to request to establish the second PDU session. However, the PDU session establishment accept message received in step 7 may not be delivered to the terminal. Instead, a PDU Session Resource Setup Response message including a Disjoint UP Path Failure Indication may be sent to the SMF to inform that allocating disjoint UP Path for the corresponding PDU session is failed and PDU session establishment accept message is not transmitted to the terminal.

Step 10) NG-RAN failed to allocate the Disjoint UP Paths and refused to allocate resources to the PDU session, but SMF #2 may determine to leave the PDU session in a deactivation state and accept PDU session establishment request from a terminal.

Step 11) SMF #2 may deliver a PDU session establishment accept message including a Disjoint UP Path Failure Indication to the terminal. Through this, the terminal may know that allocation of disjoint UP paths for two PDU sessions for redundant transmission has failed.

The SMF may set the timer value received from the NG-RAN in step 9 as back-off timer so that the terminal cannot attempt to activate deactivated PDU session again for redundant transmission for a certain period of time. Alternatively, the value configured locally within the SMF may be set as a back-off timer. SMF may transmit, to the terminal, the set back-off timer with a Disjoint UP Path Failure Indication.

In step 9, the NG-RAN does not deliver the PDU session establishment approval message to the UE, but instead sends a PDU Session Resource Setup Response message including a Disjoint UP Path Failure Indication to the SMF. In spite of this case, the terminal may be notified by including a Disjoint UP Path Failure Indication in the PDU session establishment accept message. In this case, as in the first embodiment of the present specification described above, the terminal may select to release the PDU session based on the Disjoint UP Path Failure Indication, or may maintain the PDU session as is. Alternatively, as in the second embodiment of the present specification described above, the SMF may select release of the corresponding PDU session. Or, as in the second embodiment of the present specification described above, the SMF may select Deactivation for the corresponding PDU session and may notify the NG-RAN to release the resources allocated for the corresponding PDU session, and may also inform the terminal that the corresponding PDU session has been deactivated.

### 7. Seventh Embodiment

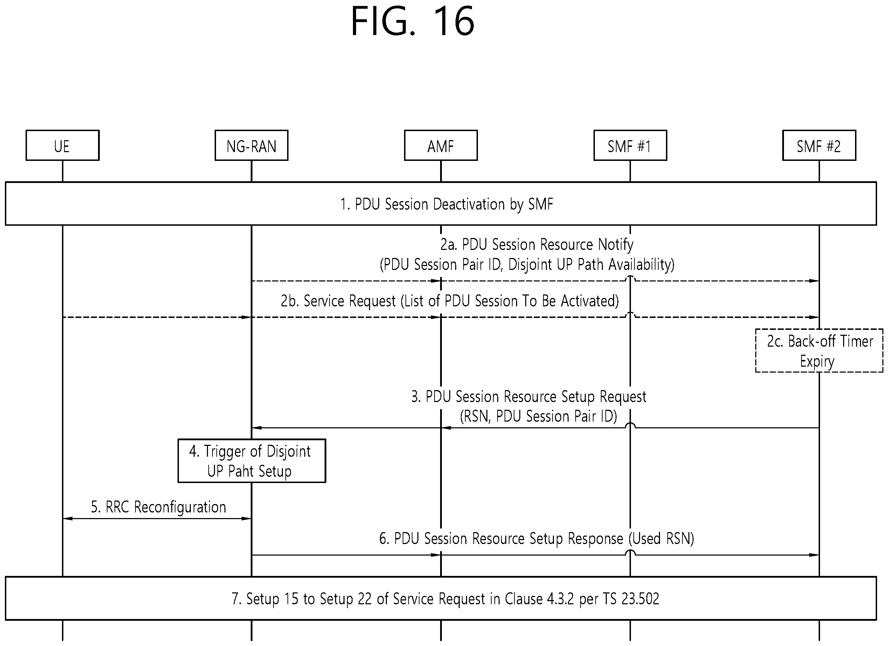

**FIG. 16** **shows the seventh embodiment of this specification.**

According to the seventh embodiment of the present specification disclosed in FIG. 16, in case one of the two PDU sessions for redundant transmission is deactivated, the terminal or SMF may re-activate the PDU session.

Basically, it is assumed that SMF #1 and SMF #2 are each responsible for two redundant PDU sessions, but it can also be applied when one SMF is responsible for both PDU sessions.

Step 1) it is assumed that 'Disjoint UP Paths for two PDU sessions for redundant transmission as in the above-described embodiments (e.g., the second to fourth and sixth embodiments of the present specification) is not allocated, so SMF deactivates one of the two PDU sessions'.

Step 2) SMF #2 may determine to activate a deactivated PDU session for one of the following reasons.
- Step 2a) When it becomes possible to allocate a disjoint UP path for a deactivated PDU session in addition to the PDU session currently in use by the terminal, the NG-RAN may transmit, to the SMF #2 through the AMF, NGAP message including PDU session Pair ID and Disjoint UP Path Availability Indication. The AMF may transmit, to the SMF #2, this fact using the PDU session Pair ID, the corresponding PDU session ID, and the SMF information in charge. At this time, AMF may also transmit ID information for the corresponding PDU session.

NG-RAN may continuously check whether it can provide a disjoint UP path for a new PDU session in addition to the PDU session currently in use by the UE for redundant transmission. This operation may be performed by the SMF requesting the NG-RAN in advance, or may be performed upon a request from the terminal. Alternatively, after the NG-RAN fails to allocate disjoint UP path as in the above-described embodiments of the present specification, the NG-RAN may continue to check the situation on its own.

In order for the AMF to forward the NGAP message sent by NG-RAN to SMF #2, the AMF may store both the PDU session ID that has the same PDU session pair ID and the SMF in charge of it.
- Step 2b) When the back-off timer configured inside the terminal or previously received from the network expires, the terminal may transmit, to the network, Service Request message including ID of the PDU session in List Of PDU Sessions To Be Activated to activate Deactivated PDU Session for redundant transmission.

Instead of informing SMF the fact in step 2a, NG-RAN may directly inform the terminal using an RRC message. Based on this, step 2b may be executed.
- Step 2c) When the back-off timer configured inside the SMF or previously received from the NG-RAN expires, SMF #2 may attempt to activate Deactivated PDU Session for Redundant transmission.

Step 3) SMF #2 may start the procedure to reactivate the deactivated PDU session. First, SMF #2 may request NG-RAN to allocate resource for the corresponding PDU session through AMF. At this time, the PDU session Pair ID and RSN information may be delivered to the NG-RAN through AMF. If the UE transmits a Service Request message through step 2b, SMF #2 may also transmit a Service Accept message to the NG-RAN in order to respond to the UE. In other cases, it does not include a Service Accept message.

Step 4) NG-RAN may attempt to allocate disjoint UP Paths for two PDU sessions for redundant transmission. For this purpose, dual connectivity may be used, where the master node and secondary node are each responsible for one PDU session, or disjoint UP paths may be allocated by using two DUs within one NG-RAN.

NG-RAN may attempt to allocate a disjoint UP Path after the second PDU session is created, that is, after step 8.

Step 5) If it is decided to accept resource allocation for the PDU session according to the SMF #2 request, NG-RAN may deliver bearer information for the second PDU session to the UE through RRC Reconfiguration. At this time, if SMF #2 transmits a Service Accept message to the NG-RAN in step 3 in response to step 2b, the NG-RAN may deliver the Service Accept message to the terminal..

Step 6) NG-RAN may inform SMF #2 whether resource allocation for the corresponding PDU session was successful. In this process, if the NG-RAN allocates the UP path using an RSN value different from the RSN received from SMF #2 in step 4, the corresponding RSN value may also be notified to SMF #2.

Step 7) The remaining steps in the Service Request procedure shown in Clause 4.2.3 of TS 23.502 V16.8.0 (2021-03) may be performed.

### 8. eighth Embodiment

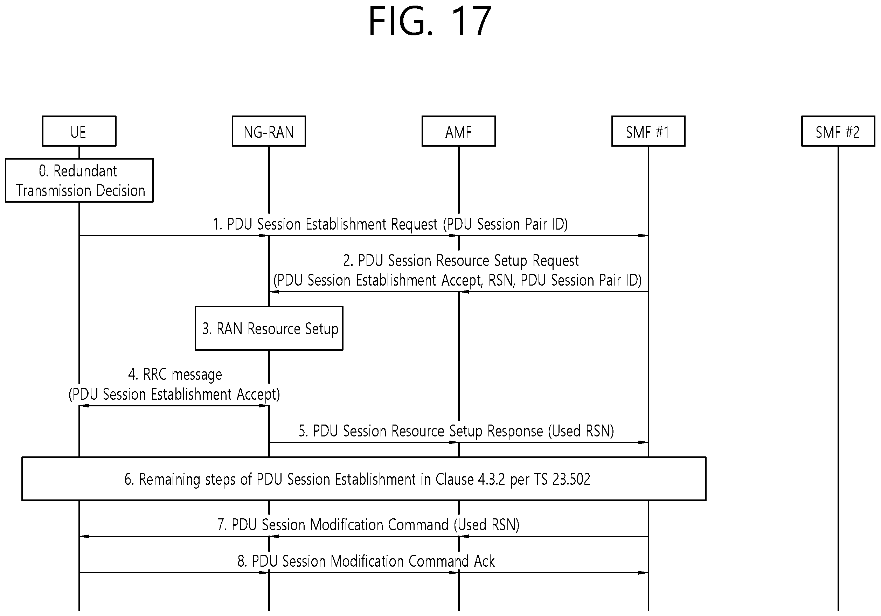

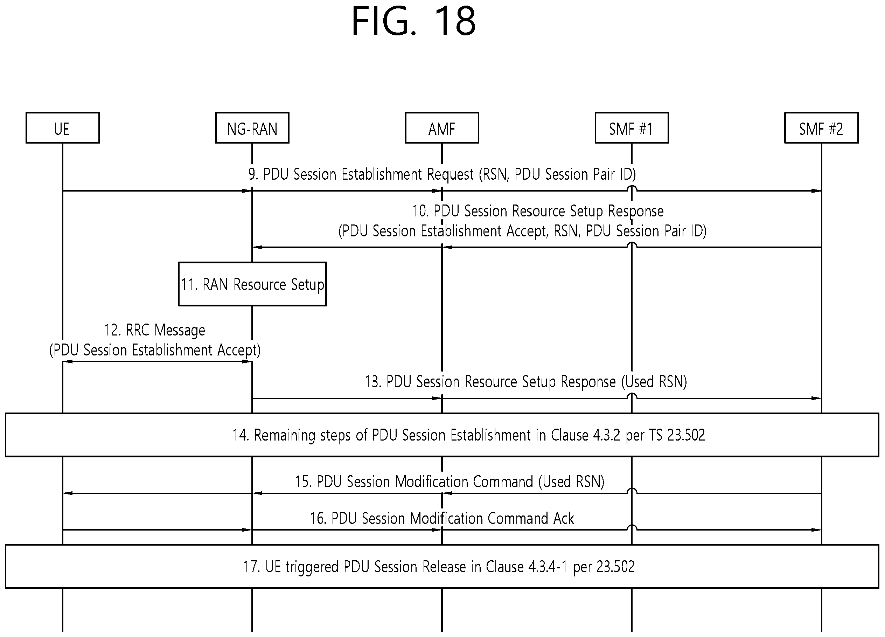

**FIGS. 17** **and** **18** **show the eighth embodiment of this specification.**

According to the eighth embodiment of the present specification disclosed in FIGS. 17 and 18, when the NG-RAN allocates an RSN that is different from the RSN sent by the terminal for PDU session for redundant transmission, this is informed to the terminal. The terminal may determine whether disjoint UP paths for two PDU session are allocated or allocate RSN value that does not correspond with it, considering Used RSN used for another redundant PDU session. Basically, it is assumed that SMF #1 and SMF #2 are responsible for each PDU session, but it may also be applied when one SMF is responsible for both PDU sessions.

Step 0) Related information (e.g., RSN, PDU session Pair ID, DNN, S-NSSAI, etc. to be used to transmit the traffic) may be pre-configured inside the terminal to enable redundant transmission of traffic of a specific application. Alternatively, the terminal may be configured, by the PCF, URSP rules for redundant transmission during the process of registering with the network.

Based on the information, the terminal may decide to create a redundant PDU session for redundant transmission of traffic of a specific application.

Step 1) The terminal may transmit, to the network, PDU session establishment request message including PDU session Pair ID information, DNN (data network name) and S-NSSAI (Single Network Slice Selection Assistance Information) to create the first PDU session for Redundant transmission. If the UE cannot add RSN information based on UE Local Configuration or URSP rules, the RSN information may be determined by the SMF and delivered to the NG-RAN.

If the UE cannot add RSN information based on UE Local Configuration or URSP rules, the SMF may determine RSN for the corresponding PDU session, based on the PDU session Pair ID received from the UE, indication (that redundant transmission is needed received) form the PCF, or the DNN/S-NSSAI combination and local policy configuration information, etc.

Step 2) SMF #1 may request NG-RAN to allocate resource for the corresponding PDU session through AMF. At this time, SMF #1 may transmit the PDU session Pair ID and RSN information to the NG-RAN through AMF. Additionally, the PDU session resource setup request message may also include a PDU session establishment accept message to be delivered to the terminal.

After receiving the PDU Session Resource Setup Response message from the NG-RAN in step 5, SMF #1 may also generate a PDU session establishment accept message to be delivered to the UE and deliver it to the NG-RAN. At this time, the PDU session establishment accept message including the Used RSN value received in step 5 may be transmitted, so steps 7 and 8 may be omitted.

Step 3) NG-RAN may allocate resources for the corresponding PDU session according to the SMF request. During this process, it is possible for the NG-RAN to allocate an UP path for the corresponding PDU session using an RSN value different from the RSN received from SMF #1 in step 2.

Step 4) The PDU session establishment approval message received from AMF in step 2 can be delivered to the terminal.

If the NG-RAN allocates an RSN that is different from the RSN received from SMF #1 in step 3, the corresponding value may be notified to the UE through an RRC message. In this case, steps 7-8 may be omitted.

Step 5) After creating the UE context and completing resource allocation for the PDU session, the NG-RAN may respond to the AMF with a PDU Session Resource Setup Response message. If the NG-RAN allocates an RSN that is different from the RSN received from SMF #1 in step 3, it can respond by sending the other RSN to SMF #1 through the AMF.

NG-RAN may calculate the time required until a new PDU session can be established in case the SMF or the terminal selects release for the corresponding PDU session and transmit the timer value based on the time to the SMF.

Step 6) Steps 16a to 21 described in FIGS. 5 and 6, which are the remaining steps of the PDU session establishment procedure, may be performed.

Step 7) SMF #1 may include the RSN value received in step 5 in the PDU Session Modification Command message and deliver it to the terminal. The terminal may compare the RSN value received from the SMF in step 7 with the RSN value stored by the terminal. If the two values are different, the terminal may know the new RSN value (rather than the RSN that the NG-RAN included in the PDU session establishment request message in step 1) was used.

Considering the case where the terminal select release for a specific PDU session because the terminal knows that it has been failed to allocate a Disjoint UP Path based on the Used RSN, for preventing an attempt to establish a new PDU session for redundant transmission for a certain period of time, SMF may set the timer value received from NG-RAN in step 5 as a back-off timer or set the value in local configuration within the SMF as a back-off timer. SMF may deliver, to the terminal, the set back-off timer with Used RSN.

An indication indicating whether the PDU session Pair ID/RSN information is locally configured inside the terminal may be stored inside the PCF or UDM. The information is delivered to SMF #1, and SMF #1 may refer to the information to decide whether to deliver the Used RSN to the terminal. That is, if the PDU session Pair ID and RSN are locally configured inside the terminal, and the terminal transmits the PDU session establishment request message including the PDU session Pair ID and RSN information to the SMF, SMF #1 may transmit the Used RSN information used by the terminal in step 7. If the PDU session Pair ID and RSN are not locally configured inside the terminal, or if the terminal includes the PDU session Pair ID and RSN in the PDU session establishment request message based on the URSP rule, the Used RSN information used by the terminal in step 7 may not be transmitted.

Step 8) The terminal may respond to the network through a PDU Session Modification Command Ack message.

Step 9) The terminal may transmit a PDU session establishment request message including PDU session Pair ID and RSN information, DNN, and S-NSSAI to the network to establish a second PDU session for redundant transmission. If the UE cannot add RSN information based on UE Local Configuration or URSP rules, the RSN information may be determined by the SMF and delivered to the NG-RAN.

The terminal may inform the network that two PDU sessions are associated for redundant transmission by transmitting the same PDU session Pair ID value for the PDU session created in steps 1 to 8 and the PDU session to be created in the current step. Additionally, when the UE includes an RSN value in the PDU session establishment request message, the RSN value included in step 1 and the RSN value included in step 9 for the same application must be different. If the Used RSN value is received from SMF in step 4 or step 7, the RSN value to be used in step 9 may be determined by referring to it.

If the UE cannot add RSN information based on UE Local Configuration or URSP rules, the SMF #2 may determine RSN for the corresponding PDU session, based on the PDU session Pair ID received from the UE, indication (that redundant transmission is needed received) form the PCF, or the DNN/S-NSSAI combination and local policy configuration information, etc.

Step 10) SMF #2 may request NG-RAN to allocate resource for the corresponding PDU session through AMF. At this time, SMF #2 may transmit the PDU session Pair ID and RSN information to the NG-RAN through AMF. Additionally, the PDU session resource setup request message may also include a PDU session establishment accept message to be delivered to the terminal.

After receiving the PDU Session Resource Setup Response message from the NG-RAN in step 13, SMF #2 may also generate a PDU session establishment accept message to be delivered to the UE and deliver it to the NG-RAN. At this time, the PDU session establishment accept message including the Used RSN value received in step 13 may be transmitted, so steps 15 and 16 may be omitted.

Step 11) NG-RAN may allocate resources for the corresponding PDU session according to the SMF request. During this process, it is possible for the NG-RAN to allocate an UP path for the corresponding PDU session using an RSN value different from the RSN received from SMF #2 in step 10.

Additionally, NG-RAN may attempt to allocate disjoint UP Paths for two PDU sessions for redundant transmission. For this purpose, dual connectivity may be used, where the master node and secondary node are each responsible for one among the two PDU session, or NG-RAN may attempt to allocate disjoint UP paths by using two DUs within one NG-RAN.

In the case of dual connectivity, the eighth embodiment of the present specification may be combined with the remaining parts excluding the overlapping parts with the fourth embodiment of the present specification, which will be described later. However, in the content of step 5 of the fourth embodiment of the present specification described above, informing the terminal that the disjoint UP path allocation has failed cannot be combined with the eighth embodiment.

Alternatively, when two DUs are used within one NG-RAN, the eighth embodiment of the present specification may be combined with the remaining parts excluding the overlapping parts with the third embodiment of the present specification described above. However, in the content of step 7 of the third embodiment of the present specification, which will be described later, informing the terminal that the disjoint UP path allocation has failed cannot be combined with the eighth embodiment.

NG-RAN may begin attempting to allocate a disjoint UP Path after the second PDU session is created.

Step 12) The PDU session establishment accept message received from AMF in step 10 may be delivered to the terminal.

If the NG-RAN allocates an RSN that is different from the RSN received from SMF #2 in step 11, the corresponding value may be notified to the UE through an RRC message. In this case, steps 15-16 may be omitted.

Step 13) After creating the UE context and completing resource allocation for the PDU session, the NG-RAN may respond to the AMF with a PDU Session Resource Setup Response message. If the NG-RAN allocates an RSN that is different from the RSN received from SMF #2 in step 11, it can respond by sending the other RSN to SMF #2 through the AMF.

NG-RAN may calculate the time required until a new PDU session can be established in case the SMF or the terminal selects release for the corresponding PDU session and transmit the timer value based on the time to the SMF.

Step 14) Steps 16a to 21 described in FIGS. 5 and 6, which are the remaining steps of the PDU session establishment procedure, may be performed.

Step 15) SMF #2 may include the RSN value received in step 13 in the PDU Session Modification Command message and deliver it to the terminal. The terminal may compare the RSN value received from the SMF in step 15 with the RSN value stored by the terminal. If the two values are different, the terminal may know the new RSN value (rather than the RSN that the NG-RAN included in the PDU session establishment request message in step 9) was used.

Considering the case where the terminal select release for a specific PDU session because the terminal knows that it has been failed to allocate a Disjoint UP Path based on the Used RSN, for preventing an attempt to establish a new PDU session for redundant transmission for a certain period of time, SMF may set the timer value received from NG-RAN in step 13 as a back-off timer or set the value in local configuration within the SMF as a back-off timer. SMF may deliver, to the terminal, the set back-off timer with Used RSN.

An indication indicating whether the PDU session Pair ID/RSN information is locally configured inside the terminal may be stored inside the PCF or UDM. The information is delivered to SMF #2, and SMF #2 may refer to the information to decide whether to deliver the Used RSN to the terminal. That is, if the PDU session Pair ID and RSN are locally configured inside the terminal, and the terminal transmits the PDU session establishment request message including the PDU session Pair ID and RSN information to the SMF, SMF #2 may transmit the Used RSN information used by the terminal in step 15. If the PDU session Pair ID and RSN are not locally configured inside the terminal, or if the terminal includes the PDU session Pair ID and RSN in the PDU session establishment request message based on the URSP rule, the Used RSN information used by the terminal in step 15 may not be transmitted.

Step 16) The terminal may respond to the network through a PDU Session Modification Command Ack message.

Step 17) If the two Used RSNs received in steps 7 and 15 is the same, the terminal may determine that disjoint UP paths have not been created. The terminal may decide whether to maintain two PDU sessions or release one PDU session even if disjoint UP paths are not allocated. If it is decided to release one PDU session, the terminal may initiate a PDU Session Release procedure.

If a back-off timer is received from the SMF in step 15, the terminal may not attempt to establish a new PDU session for redundant transmission during that time. Or, if the back-off timer value is locally configured inside the terminal, the terminal may not attempt to establish a new PDU session for redundant transmission during that time.

Additionally, even if the two Used RSNs received in steps 7 and 15 is the same, the terminal may not attempt to establish a new PDU session using a URSP rule with a lower priority rather than the URSP rule currently used for the traffic of the application.

In general, when multiple PDU sessions are needed, the terminal may establish multiple sessions simultaneously. However, when establishing a PDU session for redundant transmission, the second PDU session must be established after establishing the first PDU session. That is, if a PDU session establishment request with the same PDU session Pair ID is in progress, the terminal waits without sending a request to establish a second session. After the terminal receives updated RSN for the first PDU session from the network based on establishment of the first PDU session, the terminal may transmit a second request to establish a second session. If the network does not support sending an updated RSN (e.g. Rel-16 network) or the SMF does not transmit updated value because the SMF use RSN received from the terminal, the terminal may continue to wait. To solve this problem, in order to prevent the terminal from continuously waiting to receive an updated RSN from the network when creating the first PDU session, the terminal may use a timer after transmitting a PDU session establishment request or after receiving PDU session establishment accept. If the timer expires, the terminal may transmit a request for a second session even if it does not receive an updated RSN from the network. Alternatively, the SMF may always send the RSN value, even if the RSN has not been updated. In this case, the terminal may be informed in the registration procedure whether the network has the capability to transmit the RSN to the terminal.

In the process of establishing a PDU session for redundant transmission, if the terminal wants to create multiple sessions simultaneously, as in the eighth embodiment, the terminal may not determine RSN value for the second PDU session considering RSN value used by NG-RAN for the first PDU session. However, the terminal may still determine whether a disjoint UP path has been allocated by considering the Used RSN value used by the NG-RAN for each PDU session. Alternatively, if the NG-RAN fails to allocate disjoint UP path as in the first embodiment or the second embodiment, the NG-RAN may notify the terminal it through the failure cause.

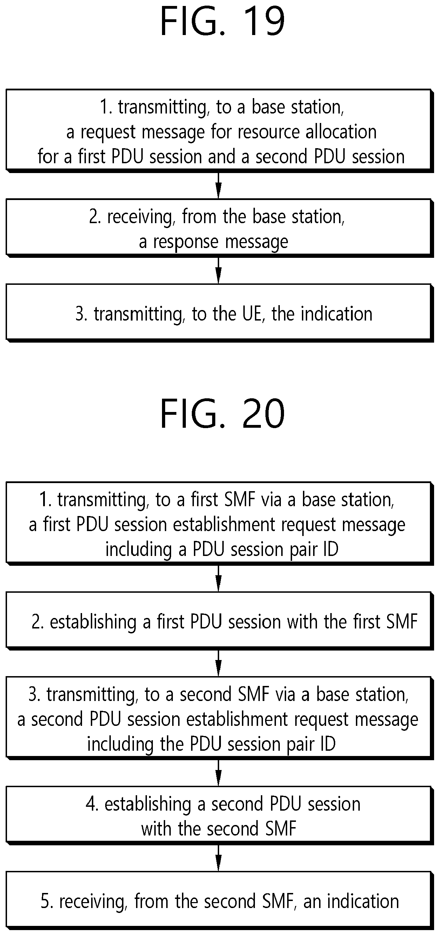

**FIG. 19** **shows the procedure of SMF for the disclosure of this specification.**
1. The SMF may transmit, to a base station, a request message for resource allocation for a first PDU (Protocol Data Unit) session and a second PDU session.
   The first PDU session and the second PDU session may be established by a UE (User Equipment), based on the same PDU session pair ID.
2. The SMF may receive, from the base station, a response message.
   The response message may include an indication indicating whether disjoint UP paths are allocated for the first PDU session and the second PDU session, respectively.
3. The SMF may transmit, to the UE, the indication.

Tthe first PDU session and the second PDU session may be redundant PDU sessions for redundant transmission.

A first RSN (Retransmission Sequence Number) related to the first PDU session may be not same with a second RSN related to the second PDU session.

The SMF may determine to deactivate at least one of the first PDU session and the second PDU session, based on the indication.

The SMF determine to release at least one of the first PDU session and the second PDU session, based on the indication.

The SMF may set a back-off timer for the determined least one of the first PDU session and the second PDU session to be deactivated.

The SMF may set back-off timer for the determined least one of the first PDU session and the second PDU session to be released.

**FIG. 20** **shows the procedure of UE for the disclosure of this specification.**

The UE may transmit, to a first SMF (Session Management Function) via a base station, a first PDU (Protocol Data Unit) session establishment request message including a PDU session pair ID.

The UE may establish a first PDU session with the first SMF.

The UE may transmit, to a second SMF via a base station, a second PDU session establishment request message including the PDU session pair ID.

The UE may establish a second PDU session with the second SMF.

The UE may receive, from the second SMF, an indication.

The indication may include an indication indicating whether disjoint UP paths are allocated for the first PDU session and the second PDU session, respectively.

The first PDU session and the second PDU session may be redundant PDU sessions for redundant transmission.

A first RSN (Retransmission Sequence Number) related to the first PDU session may be not same with a second RSN related to the second PDU session.

The UE may determine to release at least one of the first PDU session and the second PDU session, based on the indication.

The indication may include a back-off timer for a new PDU session for redundant transmission, based on at least one of the first PDU session and the second PDU session being released.

Hereinafter, a device for providing communication in a wireless communication system according to some embodiments of the present specification will be described.

For example, SMF may include a processor, transceiver and memory.

For example, a processor may be configured to be operably coupled with a memory and a processor.

The processor may perform operation, comprising: transmitting, to a base station, a request message for resource allocation for a first PDU (Protocol Data Unit) session and a second PDU session, wherein the first PDU session and the second PDU session are established by a UE (User Equipment), based on the same PDU session pair ID; receiving, from the base station, a response message, wherein the response message includes an indication indicating whether disjoint UP paths are allocated for the first PDU session and the second PDU session, respectively; transmitting, to the UE, the indication.

Hereinafter, a non-volatile computer-readable medium storing one or more instructions for performing communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the UE.

The stored one or more stored instructions cause processors to: transmitting, to a first SMF (Session Management Function) via a base station, a first PDU (Protocol Data Unit) session establishment request message including a PDU session pair ID; establishing a first PDU session with the first SMF; transmitting, to a second SMF via a base station, a second PDU session establishment request message including the PDU session pair ID; establishing a second PDU session with the second SMF; receiving, from the second SMF, an indication, wherein the indication includes an indication indicating whether disjoint UP paths are allocated for the first PDU session and the second PDU session, respectively.

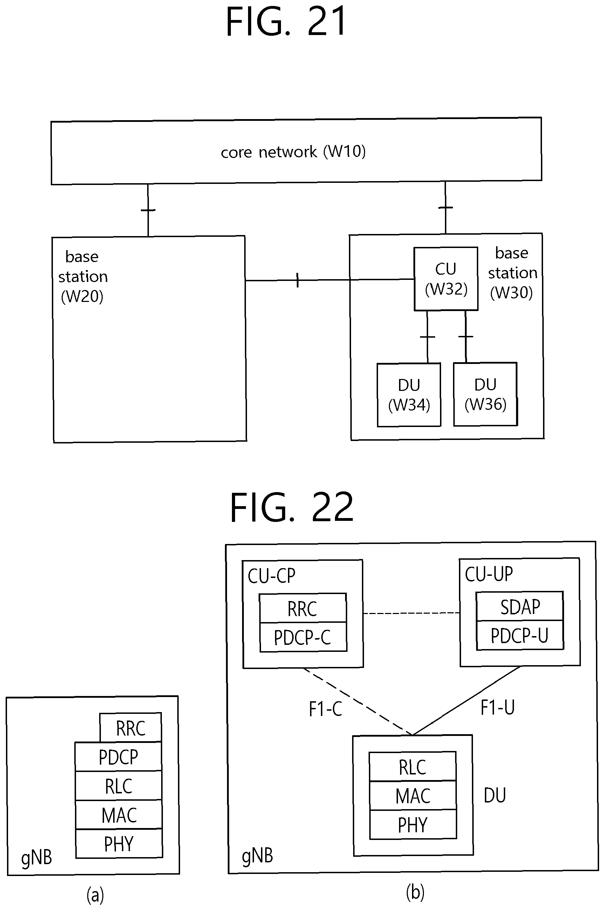

**FIG. 21** **illustrates a block diagram of a network node according to an embodiment of the present specification.**

In particular, FIG. 21 is a diagram illustrating the network nodes of FIG. W in more detail when the base station is divided into a central unit (CU) and a distributed unit (DU).

Referring to FIG. 21, base stations W20 and W30 may be connected to the core network W10, and base station W30 may be connected to a neighboring base station W20. For example, the interface between the base stations (W20, W30) and the core network (W10) may be referred to as NG, and the interface between the base station (W30) and the neighboring base station (W20) may be referred to as Xn.

The base station (W30) may be divided into CU (W32) and DU (W34, W36). That is, the base station W30 can be operated hierarchically separated. The CU (W32) may be connected to one or more DUs (W34, W36). For example, the interface between the CU (W32) and the DUs (W34, W36) may be referred to as F1. The CU (W32) may perform the functions of the upper layers of the base station, and the DUs (W34, W36) may perform the functions of the lower layers of the base station. For example, the CU (W32) may be a logical node that hosts the radio resource control (RRC), service data adaptation protocol (SDAP), and packet data convergence protocol (PDCP) layers of a base station (e.g., gNB). And, the DUs (W34, W36) may be logical nodes that host the radio link control (RLC), media access control (MAC), and physical (PHY) layers of the base station. Alternatively, the CU (W32) may be a logical node hosting the RRC and PDCP layers of a base station (e.g., en-gNB).

The operation of DUs (W34, W36) may be partially controlled by CU (W32). One DU (W34, W36) can support one or more cells. One cell may be supported by only one DU (W34, W36). One DU (W34, W36) can be connected to one CU (W32), and by appropriate implementation, one DU (W34, W36) can be connected to multiple CUs.

**FIG. 22** **shows a detailed deployment scenario.**

In this deployment scenario, RAN protocol functions are distributed to various locations such as gNB-CU and gNB-DU. gNB-DU hosts RLC, MAC and physical layers. gNB-CU-CP (hereinafter gNB-CU-CP may simply be referred to as CU-CP) hosts the RRC and PDCP-C protocols. gNB-CU-UP (hereinafter gNB-CU-UP may simply be referred to as CU-UP) hosts the PDCP-U (and SDAP) protocol.

AgNB may be configured with gNB-CU-CP, multiple gNB-CU-UP, and multiple gNB-DU. The gNB-CU-CP is connected to the gNB-DU through the F1-C interface. The gNB-CU-UP is connected to the gNB-DU through the F1-U interface. gNB-CU-UP is connected to gNB-CU-CP through the E1 interface. One gNB-DU is connected to only one gNB-CU-CP. One gNB-CU-UP is connected to only one gNB-CU-CP. However, a gNB-DU and/or gNB-CU-UP may be connected to multiple gNB-CU-CPs by appropriate implementation. One gNB-DU can be connected to multiple gNB-CU-UPs under the control of the same gNB-CU-CP. One gNB-CU-UP can be connected to multiple gNB-DUs under the control of the same gNB-CU-CP. The connection between gNB-CU-UP and gNB-DU is established by gNB-CU-CP using the bearer context management function. The gNB-CU-CP selects the appropriate gNB-CU-UP(s) for the service requested for the UE. In case of multiple gNB-CU-Ups, they belong to the same security domain. Data forwarding between gNB-CU-UP during intra-gNB-CU-CP handover within gNB may be supported by Xn-U.

According to the exploded deployment scenario shown in Fig. 22. RAN functions can be optimally deployed in different locations based on the scenario and desired performance. For example, a CU-CP may be located near a DU. Alternatively, CU-CP can be deployed together with DU. In this case, a short delay time can be provided for important CP procedures such as connection (re)establishment, handover, and state transition. CU-UP, on the other hand, can be centralized in regional or national data centers. Therefore, CU-UP is advantageous for cloud implementation and can provide a centralized termination point for UP traffic in dual connectivity and tight interoperability scenarios. Additionally, additional CU-UPs may be placed close to (or co-located with) the DU to provide a local termination point for UP traffic for applications requiring very low latency (e.g. ultra-reliable low-latency communications (URLLC)).

The present specification may have various effects.

For example, through the procedure disclosed in this specification, when allocation of a Disjoint UP Path fails, the terminal can release the PDU session rather than continuing to maintain it, thereby preventing unnecessary waste of resources.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by a SMF (Session Management Function), comprising:
transmitting, to a base station, a request message for resource allocation for a first PDU (Protocol Data Unit) session and a second PDU session,
wherein the first PDU session and the second PDU session are established by a UE (User Equipment), based on the same PDU session pair ID;
receiving, from the base station, a response message,
wherein the response message includes an indication indicating whether disjoint UP paths are allocated for the first PDU session and the second PDU session, respectively;
transmitting, to the UE, the indication.

2. The method of claim 1,
wherein the first PDU session and the second PDU session are redundant PDU sessions for redundant transmission.

3. The method of claim 1,
wherein a first RSN (Retransmission Sequence Number) related to the first PDU session is not same with a second RSN related to the second PDU session.

4. The method of claim 1, further comprising:
determining to deactivate at least one of the first PDU session and the second PDU session, based on the indication.

5. The method of claim 1, further comprising:
determining to release at least one of the first PDU session and the second PDU session, based on the indication.

6. The method of claim 4, further comprising:
setting a back-off timer for the determined least one of the first PDU session and the second PDU session to be deactivated.

7. The method of claim 5, further comprising:
setting back-off timer for the determined least one of the first PDU session and the second PDU session to be released.

8. A method for performing communication, performed by a UE (User Equipment), comprising:
transmitting, to a first SMF (Session Management Function) via a base station, a first PDU (Protocol Data Unit) session establishment request message including a PDU session pair ID;
establishing a first PDU session with the first SMF;
transmitting, to a second SMF via a base station, a second PDU session establishment request message including the PDU session pair ID;
establishing a second PDU session with the second SMF;
receiving, from the second SMF, an indication,
wherein the indication includes an indication indicating whether disjoint UP paths are allocated for the first PDU session and the second PDU session, respectively.

9. The method of claim 8,
wherein the first PDU session and the second PDU session are redundant PDU sessions for redundant transmission.

10. The method of claim 8,
wherein a first RSN (Retransmission Sequence Number) related to the first PDU session is not same with a second RSN related to the second PDU session.

11. The method of claim 8, further comprising:
determining to release at least one of the first PDU session and the second PDU session, based on the indication.

12. The method of claim 8,
wherein the indication includes a back-off timer for a new PDU session for redundant transmission, based on at least one of the first PDU session and the second PDU session being released.

13. A SMF (Session Management Function) performing communication, comprising:
a transceiver; and
a processor to control the transceiver,
wherein the processor performs operation comprising:
transmitting, to a base station, a request message for resource allocation for a first PDU (Protocol Data Unit) session and a second PDU session,
wherein the first PDU session and the second PDU session are established by a UE (User Equipment), based on the same PDU session pair ID;
receiving, from the base station, a response message,
wherein the response message includes an indication indicating whether disjoint UP paths are allocated for the first PDU session and the second PDU session, respectively;
transmitting, to the UE, the indication.

14. A UE (user equipment) performing communication, comprising:
a transceiver; and
a processor to control the transceiver,
wherein the processor performs operation comprising:
transmitting, to a first SMF (Session Management Function) via a base station, a first PDU (Protocol Data Unit) session establishment request message including a PDU session pair ID;
establishing a first PDU session with the first SMF;
transmitting, to a second SMF via a base station, a second PDU session establishment request message including the PDU session pair ID;
establishing a second PDU session with the second SMF;
receiving, from the second SMF, an indication,
wherein the indication includes an indication indicating whether disjoint UP paths are allocated for the first PDU session and the second PDU session, respectively.

15. An apparatus in mobile communication, comprising:
at least one processor; and
at least one memory storing instructions and operably electrically connectable with the at least one processor, based on the instructions being operated by the at least one processor, performed operation comprising:
transmitting, to a first SMF (Session Management Function) via a base station, a first PDU (Protocol Data Unit) session establishment request message including a PDU session pair ID;
establishing a first PDU session with the first SMF;
transmitting, to a second SMF via a base station, a second PDU session establishment request message including the PDU session pair ID;
establishing a second PDU session with the second SMF;
receiving, from the second SMF, an indication,
wherein the indication includes an indication indicating whether disjoint UP paths are allocated for the first PDU session and the second PDU session, respectively.

16. A non-volatile computer readable storage medium having recorded instructions, wherein the instructions, based on being executed by one or more processors, cause the one or more processors to:
transmitting, to a first SMF (Session Management Function) via a base station, a first PDU (Protocol Data Unit) session establishment request message including a PDU session pair ID;
establishing a first PDU session with the first SMF;
transmitting, to a second SMF via a base station, a second PDU session establishment request message including the PDU session pair ID;
establishing a second PDU session with the second SMF;
receiving, from the second SMF, an indication,
wherein the indication includes an indication indicating whether disjoint UP paths are allocated for the first PDU session and the second PDU session, respectively.
